# EUROPEAN PATENT APPLICATION

(11) **EP 4 838 905 A1**
(43) Date of publication of application: **11.11.2026**
(21) Application number: 24915704.1
(22) Date of filing: 19.12.2024
(51) Int. Cl.: H04R 1/00, H04R 1/02, H04R 1/26, H04R 3/00, H04R 3/14

(54) **MOBILE OBJECT**

(30) Priority: 04.01.2024 JP 2024000071
(71) Applicant: Sony Group Corporation, Tokyo 108-0075 (JP)
(72) Inventor: MISAKI Karen, Tokyo 108-0075 (JP); TAGAMI Takahisa, Tokyo 108-0075 (JP); IKEDA Emiko, Tokyo 108-0075 (JP); SHIGETA Osamu, Tokyo 108-0075 (JP); FUZAWA Tsutomu, Tokyo 108-0075 (JP); KOGA Yasuyuki, Tokyo 108-0075 (JP); NOHARA Takahiro, Tokyo 108-0075 (JP)
(74) Representative: MFG Patentanwälte Meyer-Wildhagen Meggle-Freund Gerhard PartG mbB
(86) International application number: PCT/JP2024/045006
(87) International publication number: WO 2025/146781

(57) **Abstract**

The present technology relates to a mobile object that can suppress sound leakage to the surroundings. A haptics device is disposed in the mobile object such that vibration of the haptics device vibrating in response to a low-range component of an audio signal stimulates a tactile sense of a user in a riding state. The present technology can be applied to a mobile object such as an e-bike, for example.

## Description

### Technical Field

The present technology relates to a mobile object, and particularly relates to a mobile object that can suppress sound leakage to the surroundings, for example.

### Background Art

For example, PTL 1 describes a headphone that analyzes a noise signal collected by a microphone and selects an optimal noise canceling mode from among a plurality of noise canceling modes based on the analysis result.

### Citation List

### Patent Literature

PTL 1: JP 6274247 B

### Summary

### Technical Problem

When a user listens to content such as music, sound leakage to the surroundings causes a nuisance to people around the user. Further, the user may be concerned about such nuisance to the people around the user, and may not be able to be immersed in listening to the content, and may not be able to enjoy the content.

The present technology has been made in view of such circumstances, and an object thereof is to make it possible to suppress sound leakage to the surroundings.

### Solution to Problem

A mobile object of the present technology is a mobile object in which a haptics device is disposed such that vibration of the haptics device vibrating in response to a low-range component of an audio signal stimulates a tactile sense of a user in a riding state.

In the mobile object of the present technology, the haptics device is disposed such that the vibration of the haptics device vibrating in response to a low-range component of an audio signal stimulates the tactile sense of a user in the riding state.

### Brief Description of Drawings

[Fig. 1] Fig. 1 is a perspective view illustrating an external view configuration example of an embodiment of an electric-bike (e-bike), which is an electrically assisted bicycle to which the present technology is applied.
[Fig. 2] Fig. 2 is a side view of the right side of an e-bike 10 illustrating an external view configuration example of the e-bike 10.
[Fig. 3] Fig. 3 is a top view (plan view) illustrating the disposition of a haptics device 61, a speaker 71, and speakers 81 to 85 of the e-bike 10.
[Fig. 4] Fig. 4 is a diagram for explaining the concept of the e-bike 10.
[Fig. 5] Fig. 5 is a diagram illustrating an example of an application (program) installed in the e-bike 10.
[Fig. 6] Fig. 6 is a diagram illustrating a first example of light emission of an LED provided to the e-bike 10.
[Fig. 7] Fig. 7 is a diagram illustrating a second example of light emission of the LED provided to the e-bike 10.
[Fig. 8] Fig. 8 is a diagram illustrating a third example of light emission of the LED provided to the e-bike 10.
[Fig. 9] Fig. 9 is a diagram illustrating a fourth example of light emission of the LED provided to the e-bike 10.
[Fig. 10] Fig. 10 is a diagram illustrating a fifth example of light emission of the LED provided to the e-bike 10.
[Fig. 11] Fig. 11 is a diagram illustrating a first configuration example of an information processing system using the e-bike 10.
[Fig. 12] Fig. 12 is a block diagram illustrating a first electric configuration example of the e-bike 10.
[Fig. 13] Fig. 13 is a diagram illustrating a second configuration example of the information processing system using the e-bike 10.
[Fig. 14] Fig. 14 is a block diagram illustrating a second electric configuration example of the e-bike 10.
[Fig. 15] Fig. 15 is a block diagram illustrating a configuration example of an embodiment of an audio signal processing device to which the present technology is applied.
[Fig. 16] Fig. 16 is a block diagram illustrating a configuration example of a signal processing unit 254.
[Fig. 17] Fig. 17 is a diagram for explaining an example of three-way channelization processing performed by a signal generation unit 261.
[Fig. 18] Fig. 18 is a diagram for explaining output of a low-range component of a content signal by the haptics device 61.
[Fig. 19] Fig. 19 is a diagram for explaining output of a mid-range component of a content signal by the speaker 71 serving as a mid-range speaker.
[Fig. 20] Fig. 20 is a diagram for explaining output of a high-range component of a content signal by the speakers 81 to 85 serving as high-range speakers.
[Fig. 21] Fig. 21 is a diagram for explaining the degree of suppression of sound leakage by the three-way channelization.
[Fig. 22] Fig. 22 is a diagram illustrating the disposition of high-range speakers and the names of the high-range speakers.
[Fig. 23] Fig. 23 is a diagram for explaining a first example of level adjustment of a high-range component of a content signal by a level adjustment unit 262 based on recognition information.
[Fig. 24] Fig. 24 is a diagram for explaining a second example of level adjustment of a high-range component of a content signal by the level adjustment unit 262 based on recognition information.
[Fig. 25] Fig. 25 is a diagram for explaining a third example of level adjustment of a high-range component of a content signal by the level adjustment unit 262 based on recognition information.
[Fig. 26] Fig. 26 is a diagram for explaining a fourth example of level adjustment of a high-range component of a content signal by the level adjustment unit 262 based on recognition information.
[Fig. 27] Fig. 27 is a diagram for explaining a fifth example of level adjustment of a high-range component of a content signal by the level adjustment unit 262 based on recognition information.
[Fig. 28] Fig. 28 is a diagram for explaining a sixth example of level adjustment of a high-range component of a content signal by the level adjustment unit 262 based on recognition information.
[Fig. 29] Fig. 29 is a diagram for explaining a seventh example of level adjustment of a high-range component of a content signal by the level adjustment unit 262 based on recognition information.
[Fig. 30] Fig. 30 is a diagram for explaining an example of superimposition (content mixing) of an audio signal of danger notification sound on a high-range component of a content signal by a superimposition unit 263.

### Description of Embodiments

### Embodiment of e-Bike to which Present Technology Is Applied

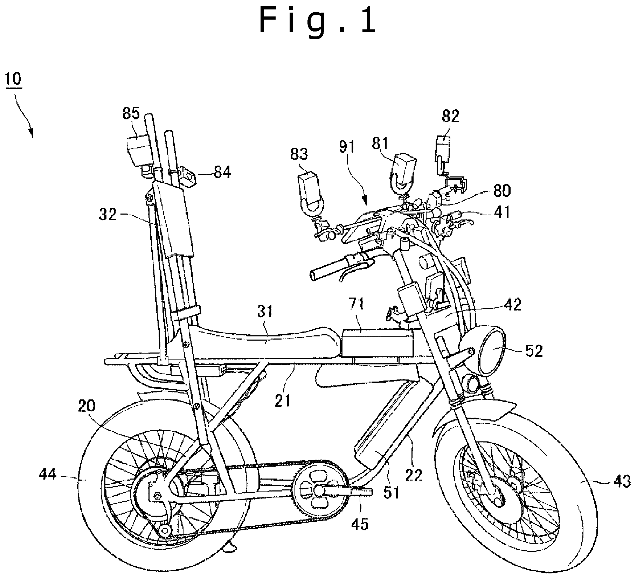

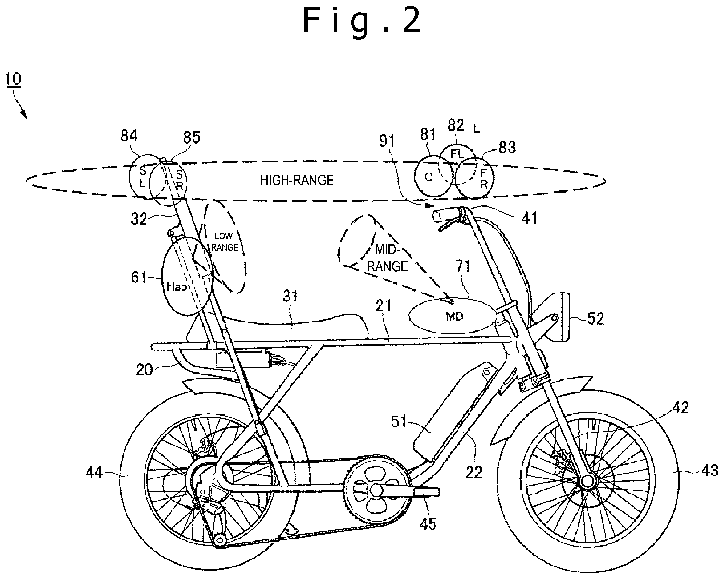

Fig. 1 is a perspective view illustrating an external view configuration example of an embodiment of an electric-bike (e-bike), being an electrically assisted bicycle to which the present technology is applied. Fig. 2 is a side view of the right side of an e-bike 10 illustrating an external view configuration example of the e-bike 10 in Fig. 1.

A speaker 71 and speakers 81 to 85 illustrated in Fig. 1 are indicated by ellipses in Fig. 2 in order to avoid complication of the drawing.

A seat (saddle) 31 is disposed on the rear portion of a top tube 21 of a frame 20 of the e-bike 10, and the speaker 71 is disposed on the front portion of the top tube 21.

The speaker 71 (MD) is a mid-range speaker for outputting (sound corresponding to) a mid-range component of an audio signal of content such as music or the like, for example. The speaker 71 is disposed to face a direction of a user (so as to have directivity in the direction of a user) in a state of riding (boarding) the e-bike 10, that is, the user in a state of sitting on the seat 31. Since the seat 31 is disposed, as described above, on the rear portion of the top tube 21, on the front portion of which the speaker 71 is disposed, it can be said that the speaker 71 is disposed to be positioned in front of and below the user in a state of riding.

A backrest 32 that comes into contact with the back of a user in a state of riding the e-bike 10 is disposed in the rear portion of the seat 31. A haptics device 61 is disposed, for example, in a portion of the backrest 32, the portion that comes into contact with the back of a user in a state of riding the e-bike 10.

In Fig. 2, the haptics device 61 is illustrated as an ellipse for the sake of clarity, but the haptics device 61 is built in the backrest 32 and cannot be seen from the outside as a matter of fact.

Note that a disposing position of the haptics device 61 is not limited to the backrest 32. The haptics device 61 needs only to be disposed such that the vibration by the haptics device 61 stimulates the tactile sense of a user in a state of riding the e-bike 10.

The haptics device 61 vibrates in response to a low-range component of an audio signal. The vibration by the haptics device 61 stimulates the tactile sense of a user, that is, the haptics device 61 applies vibration to the spine of a user (spine vibration) in a state of sitting on the seat 31, so that a low-range component of an audio signal is reproduced as a low frequency sound feeling, not as sound. A user feels a low-range component of an audio signal through the tactile sense with the vibration of the haptics device 61.

A battery 51 is detachably attached to a down tube 22 of the frame 20. The battery 51 supplies power to, for example, a light 52 provided on a front fork 42, a motor (not illustrated) of the e-bike, and other blocks requiring the power.

A support 80 (Fig. 1) is fixed to a handlebar or a stem of a handle 41. The support 80 supports the speakers 81 to 83 such that the speakers 81, 82, and 83 are each disposed in a predetermined state.

The speakers 81 to 83 are high-range speakers for outputting (sound corresponding to) a high-range component of an audio signal. The e-bike 10 includes speakers 84 and 85 serving as high-range speakers in addition to the speakers 81 to 83. Hence, the e-bike 10 includes five speakers 81 to 85, which are a plurality of speakers, serving as high-range speakers.

Speakers 84 and 85 are supported by the backrest 32.

The speakers 81 to 85 are all disposed to face the direction of a user in a state of riding the e-bike 10 and to be positioned at a height near the height of the ears of the user in a state of riding the e-bike 10.

That is, the speaker 81 (C) is supported, by the support 80, at a position in the front direction of a user in a state of riding the e-bike 10 to face the direction of the user and to be positioned at a height near the height of the ears of the user. The speaker 82 (FL) is supported, by the support 80, at a position in the front left direction of a user in a state of riding the e-bike 10 to face the direction of the user and to be positioned at a height near the height of the ears of the user. The speaker 83 (FR) is supported, by the support 80, at a position in the front right direction of a user in a state of riding the e-bike 10 to face the direction of the user and to be positioned at a height near the height of the ears of the user. The speaker 84 (SL) is supported, by the backrest 32, at a position on the left (slightly rear) of a user in a state of riding the e-bike 10 to face the direction of the user and to be positioned at a height near the height of the ears of the user. The speaker 85 (SR) is supported, by the backrest 32, at a position on the right (slightly rear) of a user in a state of riding the e-bike 10 to face the direction of the user and to be positioned at a height near the height of the ears of the user.

Note that the support 80 supporting the speakers 81 to 83 and the backrest 32 supporting the speakers 84 and 85 may be provided with a height adjustment mechanism for adjusting the height of each of the speakers 81 to 85. With the e-bike 10, by detecting the ears of a user in a state of riding the e-bike 10, the positions (heights) of the speakers 81 to 85 can be adjusted with the height adjustment mechanism such that the speakers 81 to 85 are each positioned at a height near the height of the detected ears of the user.

A display 91 for performing various displays is provided on a handlebar or a stem of the handle 41. The display 91 is integrated with a touch panel to constitute a touch screen, and also functions as an operation panel for accepting various operations of a user.

Note that the e-bike 10 may be configured such that a mobile terminal such as a smartphone, having a communication function and being capable of executing an application (program), is detachably attached to the handlebar or the stem of the handle 41 instead of providing the display 91. The smartphone can be used as the display 91 and the operation panel.

Further, various displays can be performed, other than by the display 91, by smart glasses (including contact lenses) worn by a user.

In the e-bike 10, a light source, for example, a light emitting diode (LED) is provided in a portion forming a so-called skeleton. With the LED emitting light, there can be given a performance in which the e-bike 10 appears in a dark environment. The portion forming the skeleton of the e-bike 10 is, for example, the frame 20, the seat 31, the handle 41, the front fork 42, rims of a front wheel 43 and a rear wheel 44, pedals 45 (including a crank and a chain ring as necessary), and the like.

The e-bike 10 may also be provided with an LED that irradiates a road surface around the e-bike 10 with light and displays a predetermined pattern on the road surface with the light.

Further, the e-bike 10 is provided with various sensors such as a camera for capturing an image of a user and the surroundings by light sensing, a microphone for collecting sound by sound sensing, and a distance measurement sensor for measuring a distance by light or radio wave sensing. The e-bike 10 can control the light emission of the LED and output of (vibration and sound corresponding to) an audio signal from the haptics device 61, the speaker 71, and the speakers 81 to 85, based on sensor information output by the sensors.

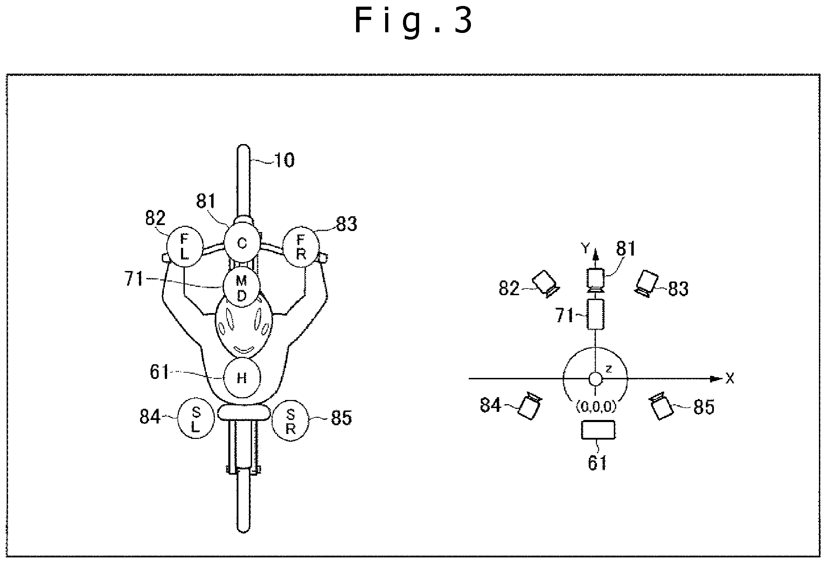

Fig. 3 is a top view (plan view) illustrating the disposition of the haptics device 61, the speaker 71, and the speakers 81 to 85 of the e-bike 10.

The haptics device 61 (H) is positioned, in a plan view, just behind (back of) a user in a state of riding the e-bike 10.

The speaker 71 (MD) is positioned, in a plan view, just in front of a user in a state of riding the e-bike 10.

The speaker 81 (C) is positioned at a position just in front of a user in a state of riding the e-bike 10 and apart from the speaker 71. The speaker 82 (FL) is positioned in the front left direction of a user in a state of riding the e-bike 10. The speaker 83 (FR) is positioned in the front right direction of a user in a state of riding the e-bike 10. The speaker 84 (SL) is positioned on the left (slightly rear) of a user in a state of riding the e-bike 10. The speaker 85 (SR) is positioned on the right (slightly rear) of a user in a state of riding the e-bike 10.

Note that Fig. 3 also illustrates the positions of the haptics device 61, the speaker 71, and the speakers 81 to 85 in a three-dimensional coordinate system (XYZ coordinate system) with the position of a user in a state of riding the e-bike 10 as the origin (0, 0, 0).

### Concept of e-Bike 10 and the like

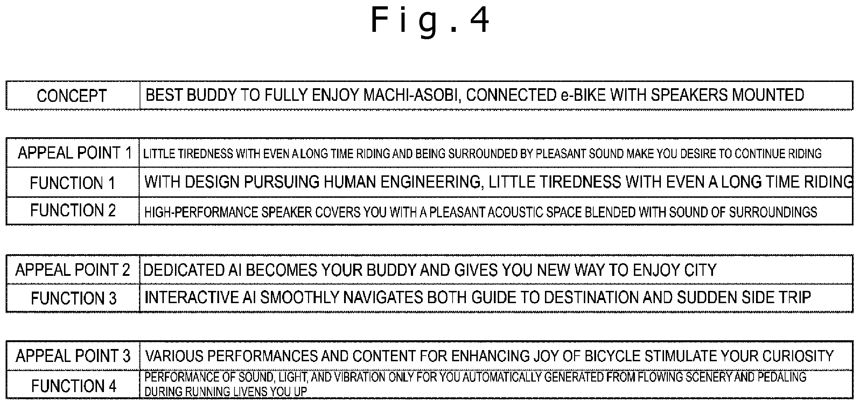

Fig. 4 is a diagram for explaining the concept of the e-bike 10.

The concept of the e-bike 10 is the best buddy to fully enjoy machi-asobi (playing in various places) (SIDE-KICK) and a connected e-bike with speakers mounted. To make a consumer who has become a user of the e-bike 10 feel this concept, the e-bike 10 has three appeal points 1, 2, and 3.

The appeal point 1 is that little tiredness with even a long-time riding and being surrounded by pleasant sound make you desire to continue riding. To achieve the appeal point 1, the e-bike 10 has, for example, functions 1 and 2. The function 1 is a design pursuing human engineering, and is a function that provokes little tiredness with even a long-time riding. The function 2 is a feature that a high-performance speaker covers you with a pleasant acoustic space blended with the sound of surroundings.

The appeal point 2 is that dedicated artificial intelligence (AI) becomes your buddy and gives a new way to enjoy a city. To achieve the appeal point 2, the e-bike 10 has, for example, a function 3. The function 3 is a feature that interactive AI smoothly navigates both guidance to a destination and a sudden side trip.

The appeal point 3 is a point that various performances and content for enhancing joy of a bicycle stimulate your (user's) curiosity. To achieve the appeal point 3, the e-bike 10 has, for example, a function 4. The function 4 is a feature to liven up with a performance of sound, light, and vibration only for you, automatically generated from flowing scenery and pedaling during running (of the e-bike 10).

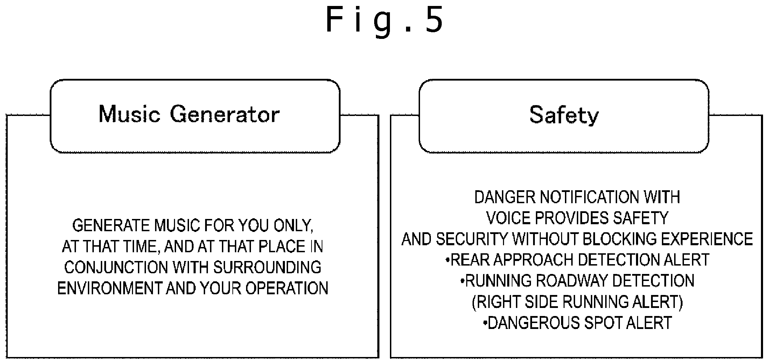

Fig. 5 is a diagram illustrating an example of an application (program) installed in the e-bike 10.

The e-bike 10 is equipped with, for example, applications " Music Generator", "Safety", and the like.

The application "Music Generator" is an application for generating music for a user only, at that time, and at that place in conjunction with the surrounding environment and the operation of the user. The audio signal (sound and vibration corresponding thereto) of music or the like generated by the application "Music Generator" is output from the haptics device 61, the speaker 71, and the speakers 81 to 85, and is perceived by a user through the tactile sense and hearing sense of the user.

The application "Safety" is an application for providing safety and security without disturbing experience by giving a danger notification with voice. The application "Safety" controls a rear approach detection alert, running roadway detection (right side running alert), a dangerous spot alert, and the like. The rear approach detection alert is an action of giving a danger notification with sound (voice) by detecting (sensing) (an approach of) an object, when there is the object (including a living body such as a person) approaching the rear of the e-bike 10. The running roadway detection is an action of giving a danger notification with sound by detecting that the e-bike 10 is running on an inappropriate place of a road, for example, on the right side of a road. The dangerous spot alert is an action of giving a danger notification with sound by detecting that the e-bike 10 is approaching a dangerous spot, for example, when the e-bike 10 is running toward the dangerous spot such as a spot where a rock fell or a spot where a traffic accident has occurred.

In addition, various applications for providing functions 1 to 4 can be installed to the e-bike 10. For example, with an application for providing the function 4, so to speak running-installation can be realized.

That is, for example, the e-bike 10 can decorate the city while using light emission of a display and/or light emission of LEDs provided to the frame 20 or the like. The e-bike 10 can be one of a user's own fashion expressions. For example, when the e-bikes 10 pass each other, the light of the LEDs reacts with each other and gradually changes. Further, for example, in a music festival at night that recommends a visit by the e-bike 10, it is possible to perform a presentation of a venue like being performed by penlights by simultaneously controlling light emission of LEDs of the e-bikes 10 of visitors. Furthermore, for example, controlling the light emission of LEDs of the e-bikes 10 of visitors based on the beat or the like of music being played in a venue makes it possible, collaborating with the music, to change, so to speak, the expression of the e-bike 10 or to give a performance for putting the venue into excitement. The simultaneous control of the light emission of the LEDs can be performed in the same manner as the simultaneous control of several tens of thousands of LED lights such as penlights held by visitors, called FreFlow (registered trademark), for example.

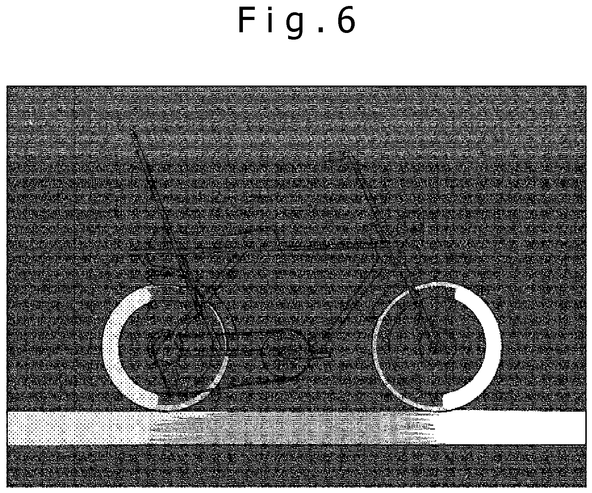

Fig. 6 is a diagram illustrating a first example of light emission of the LEDs provided to the e-bike 10.

For example, while the e-bike 10 is stopped, among the LEDs provided on the rim of the front wheel 43, the LEDs in the arc portion of approximately one third, in the front side, of the circumference of the rim can be turned on. Further, among the LEDs provided on the rim of the rear wheel 44, the LEDs in the arc portion of approximately one third, in the rear side, of the circumference of the rim can be turned on. The LEDs of the front wheel 43 and the LEDs of the rear wheel 44 can be lit in different colors. For example, the LEDs of the front wheel 43 may be lit in white, and the LEDs of the rear wheel 44 may be lit in red.

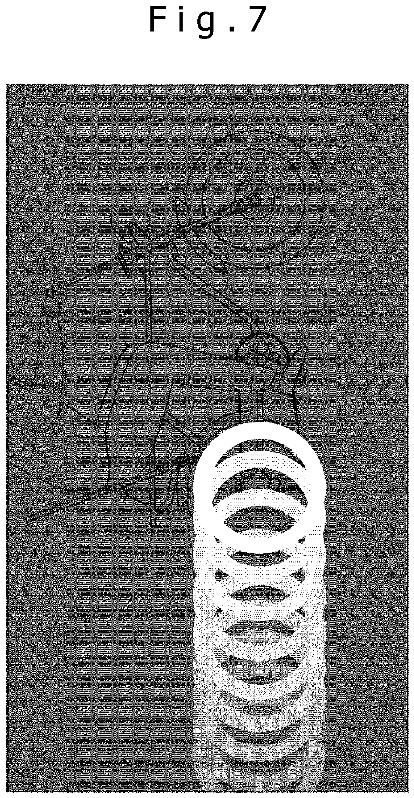

Fig. 7 is a diagram illustrating a second example of light emission of the LEDs provided to the e-bike 10.

For example, while the e-bike 10 is running, the LEDs on the entire circumference of the rim of the rear wheel 44 can be turned on.

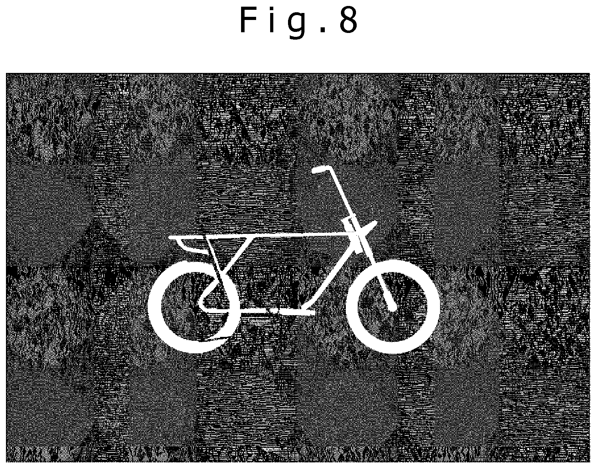

Fig. 8 is a diagram illustrating a third example of light emission of the LEDs provided to the e-bike 10.

In Fig. 8, there are turned on the LEDs that are provided to the portion forming the skeleton of the e-bike 10, for example, to the frame 20, the seat 31, the handle 41, the front fork 42, the rims of the front wheel 43 and the rear wheel 44, and the pedals 45. Turning on the LEDs of the portion forming the skeleton of the e-bike 10 makes it possible to enjoy the e-bike 10 as if appearing in the dark.

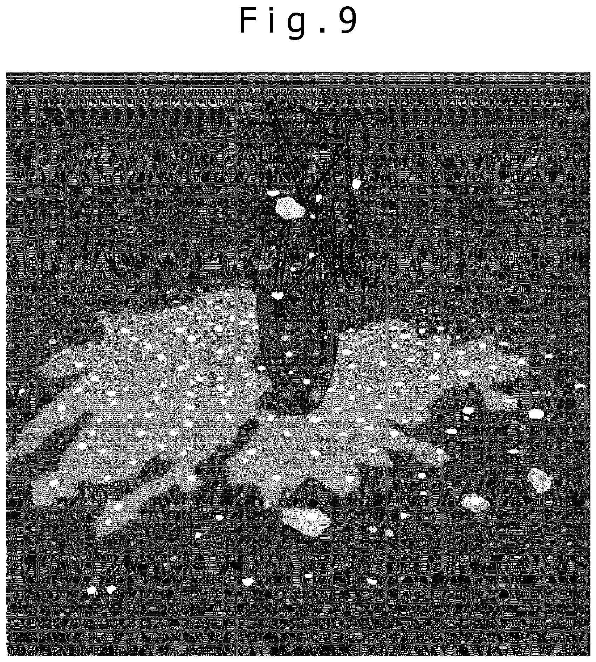

Fig. 9 is a diagram illustrating a fourth example of light emission of the LEDs provided to the e-bike 10.

In Fig. 9, the LEDs emit light such that light emitted by the LEDs provided to the e-bike 10 forms a pattern of a point group on a road surface around the e-bike 10.

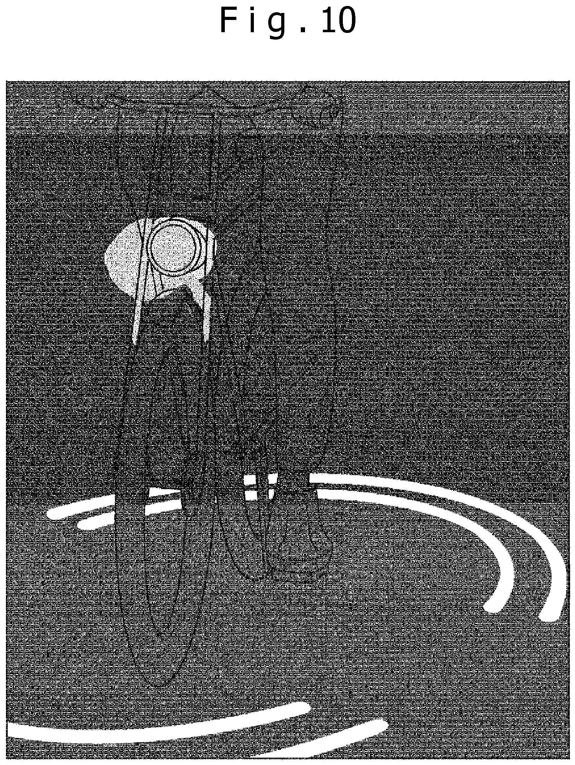

Fig. 10 is a diagram illustrating a fifth example of light emission of the LEDs provided to the e-bike 10.

In Fig. 10, the LEDs emit light such that light emitted by the LEDs provided to the e-bike 10 forms a double arc pattern on the road surface in front of and the road surface in rear of the e-bike 10.

As described above, the light emission of the LEDs provided to the e-bike 10 can be controlled based on an operation of an external operator, or an operation of a user of the e-bike 10, in addition to be controlled based on music played in a venue and/or whether the e-bike 10 is stopped or is running. Further, the light emission of the LEDs can be controlled based on scenery around the e-bike 10, audio signals (corresponding to vibration and sound) output from the haptics device 61, the speaker 71, and the speakers 81 to 85, and further, conditions of the e-bike 10 and the surrounding environment.

### Information Processing System Using e-Bike 10

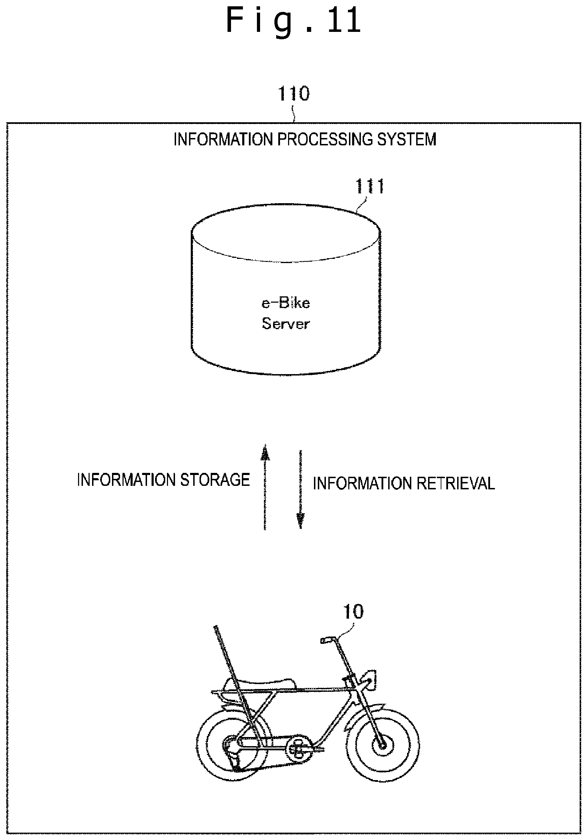

Fig. 11 is a diagram illustrating a first configuration example of an information processing system using the e-bike 10.

In Fig. 11, an information processing system 110 includes the e-bike 10 and a server (e-bike server) 111.

The e-bike 10 is a connected e-bike, and communicates with the server 111 via a network such as the Internet, a local area network (LAN), a wide area network (WAN), or a mobile phone network. The e-bike 10 communicates with the server 111, stores various types of information by transmitting the information to the server 111, and retrieves necessary information by receiving the information from the server 111.

For example, the e-bike 10 transmits to the server 111 sensor information of a sensor provided to the e-bike 10. Further, for example, the e-bike 10 receives from the server 111 an audio signal such as content to be output from the haptics device 61, the speaker 71, and the speakers 81 to 85, map data (corresponding to a map image) to be displayed on the display 91 for navigation, and the like. In addition, the e-bike 10 receives from the server 111, for example, (a trained model as) AI for performing various types of processing such as interactive AI, an application for performing various types of processing, control information for controlling the e-bike 10, and the like.

The e-bike 10 performs output control of audio signals (sound and vibration corresponding thereto) from the haptics device 61, the speaker 71, and the speakers 81 to 85 by executing AI and/or the application. In addition, the e-bike 10 performs recognition, determination, various data processing, and the like based on sensor information.

The server 111 stores various types of information transmitted from the e-bike 10 as necessary. The server 111 trains various types of AI with information from the e-bike 10 and other various types of information as training data, and stores (saves) the trained AI. The server 111 further stores an application released for the e-bike 10, (an audio signal of) content such as music and sound effects, and the like. The server 111 transmits information requested by the e-bike 10, for example, AI, an application, (an audio signal of) content, and the like to the e-bike 10. In addition, the server 111 can generate control information for controlling the e-bike 10, for example, for controlling light emission of the LEDs, and transmit the control information to the e-bike 10.

The server 111 may be a virtual server such as a cloud server, or may be a physically existing server. Further, when cost reduction of hardware such as a high-performance processor progresses in the future, such high-performance hardware can be mounted on the e-bike 10. In the case above, the e-bike 10 becomes a so-called edge AI, and the training of the AI can be performed by the e-bike 10, not by the server 111.

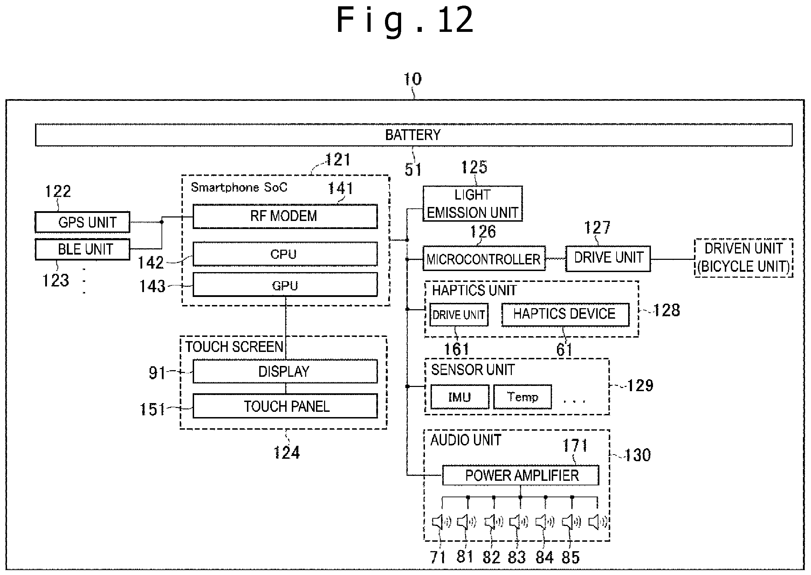

Fig. 12 is a block diagram illustrating a first electric configuration example of the e-bike 10.

That is, Fig. 12 illustrates an electric configuration example of the e-bike 10 constituting the information processing system 110 in Fig. 11.

In Fig. 12, the e-bike 10 includes the battery 51, a system on a chip (SoC) 121, a global positioning system (GPS) unit 122, a Bluetooth (registered trademark) low energy (BLE) unit 123, a touch screen 124, a light emission unit 125, a microcontroller 126, a drive unit 127, a haptics unit 128, a sensor unit 129, an audio unit 130, and the like.

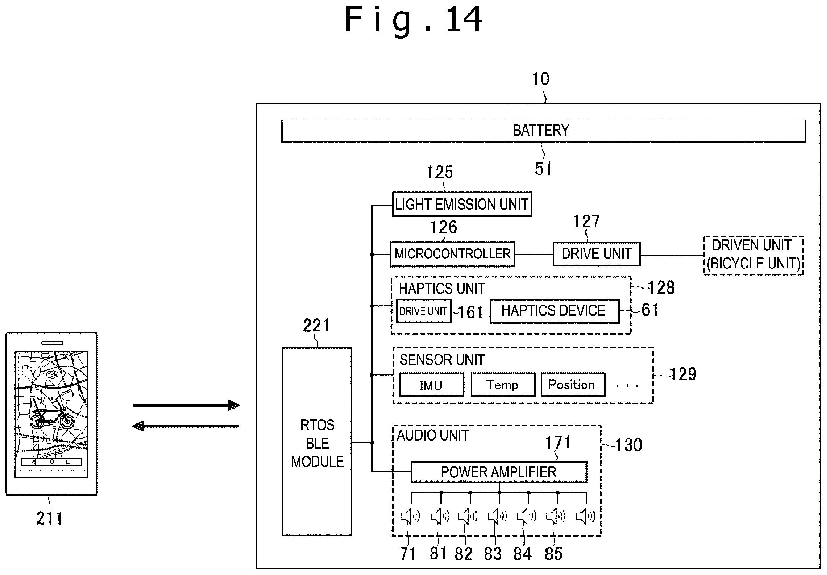

Among the blocks constituting the e-bike 10, the SoC 121, the microcontroller 126, the drive unit 127, the sensor unit 129, the audio unit 130, and other blocks requiring power are connected to the battery 51 via a power supply line for supplying power so that power is supplied from the battery 51. Note that, in order to avoid complication of the drawing, illustration of the power supply line is omitted. The same applies to Fig. 14 described below.

The SoC 121 includes a radio frequency (RF) modem 141, a central processing unit (CPU) 142, a graphics processing unit (GPU) 143, and the like, and has a function equivalent to a smartphone as a computer and a communication device.

The RF modem 141 performs processing for communication with the server 111 or the like via a network, such as transmission and reception of an RF signal, and modulation to an RF signal and demodulation of an RF signal. The RF modem 141 performs, in addition, processing for communication with the GPS unit 122 and the BLE unit 123.

The CPU 142 loads various programs such as an application and an operating system (OS) into a memory (not illustrated) and executes the programs, thereby performing various types of processing including control of blocks constituting the e-bike 10.

The GPU 143 is in charge of image processing while the CPU 142 executes a program.

The GPS unit 122 receives a radio wave from a GPS satellite and supplies the radio wave to the RF modem 141 of the SoC 121. In the SoC 121, the position of the e-bike 10 is detected (sensed) based on the radio wave from the GPS satellite.

The BLE unit 123 transmits a signal from the RF modem 141 with BLE communication, receives a signal (radio wave) with BLE communication to supply the signal to the RF modem 141.

Note that the e-bike 10 may be provided with an interface (IF) for transmitting and/or receiving a radio wave of near field communication (NFC) communication and the like, in addition to the GPS unit 122 and the BLE unit 123.

The touch screen 124 is configured by integrating the display 91 and a touch panel (operation panel) 151, and performs various displays and reception of a user operation. That is, the display 91 performs various displays, for example, displays of images or the like obtained by image processing of the CPU 142, and the touch panel 151 outputs an operation signal corresponding to a user operation. The SoC 121 performs various types of processing in response to an operation signal that the touch panel 151 outputs.

The light emission unit 125 includes LEDs (not illustrated) provided to the frame 20 or the like and a drive unit (not illustrated) for driving the LEDs. In the light emission unit 125, the drive unit drives the LEDs to turn on or off the LEDs in response to the control (of the CPU 142) of the SoC 121.

The microcontroller 126 controls the drive unit 127 in response to the control of the SoC 121. The drive unit 127 drives each unit (bicycle unit) of the e-bike 10 being a unit to be driven, for example, a motor or the like, in response to the control of the microcontroller 126.

The haptics unit 128 includes the haptics device 61 and a drive unit 161 for driving the haptics device 61. In the haptics unit 128, the drive unit 161 drives the haptics device 61 constituted of an actuator such as a piezoelectric element or a motor, for example, in response to the control of the SoC 121, and vibrates the haptics device 61.

The sensor unit 129 includes various sensors. The sensor unit 129 includes, for example, a camera, a microphone, and a distance measurement sensor described with reference to Fig. 1 and Fig. 2. The sensor unit 129 includes, for example, an inertial measurement unit (IMU) as a sensor for detecting translational motion and rotational motion in three orthogonal axial directions, a temperature sensor (Temp) for detecting temperature, a pressure (pressure-sensitive) sensor for detecting pressure, a biological sensor for detecting biological information, and the like. A pressure sensor and a biological sensor can be provided to a portion of the e-bike 10 that comes into contact with a user, for example, the seat 31, the backrest 32, (the handle grip of) the handle 41, and the like. Based on the pressure as sensor information that the pressure sensor outputs, it is possible to recognize whether a user is sitting or standing, the posture of a user, and the like, for example. Based on the biological information as sensor information that the biological sensor outputs, it is possible to recognize the degree of tension, the degree of fatigue, or the like of a user, for example. The biological information can be acquired from a wearable device when a user wears the wearable device such as a smartwatch, for example. In addition, as a sensor constituting the sensor unit 129, there can be provided a sensor for detecting the state of portions of the e-bike 10, such as a sensor for detecting the state of whether the stand of the e-bike 10 is standing or raised (stand state), for example.

The audio unit 130 includes speakers such as the speaker 71 and the speakers 81 to 85, and a power amplifier 171. The power amplifier 171 amplifies an audio signal supplied from the SoC 121, supplies the amplified audio signal to the speakers such as the speaker 71 and the speakers 81 to 85, and causes the amplified audio signal (the corresponding sound) to be output.

In the e-bike 10 configured as described above, for example, the SoC 121 executes applications "Music Generator", "Safety", and the like, thereby performing reception of a two-channel audio signal of content from the server 111, generation of a two-channel audio signal of content, generation of a two-channel audio signal of the sound for danger notification, and the like. Further, the SoC 121 appropriately performs processing on a two-channel audio signal. Examples of the processing performed on a two-channel audio signal include multi-channelization processing or three-way channelization processing for outputting the audio signal from the haptics device 61, the speaker 71, and the speakers 81 to 85.

The SoC 121 supplies a multi-channel audio signal to the haptics unit 128 and the audio unit 130. Thus, the SoC 121 causes the audio signal of each channel to be output from the haptics device 61, the speaker 71, or the speakers 81 to 85, in charge of each channel.

In the haptics unit 128, the haptics device 61 outputs an audio signal from the SoC 121 as vibration, and in the audio unit 130, the speaker 71 and the speakers 81 to 85 output an audio signal from the SoC 121 as sound. Thus, (vibration and sound corresponding to) an audio signal from the SoC 121 is presented to a user.

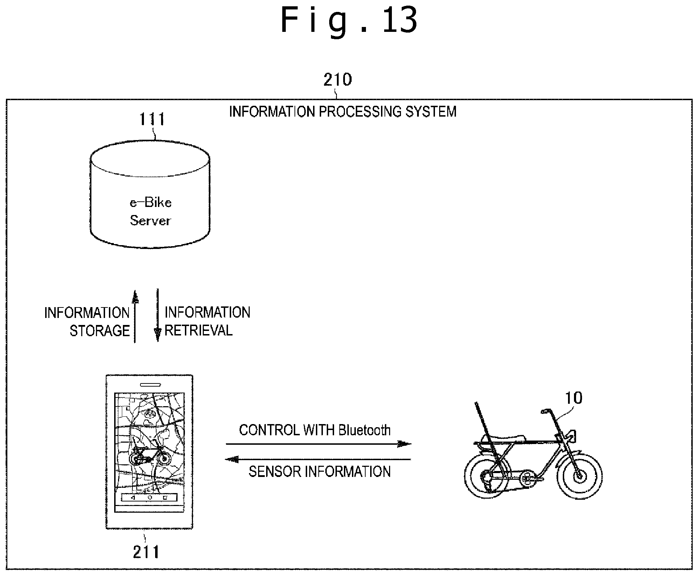

Fig. 13 is a diagram illustrating a second configuration example of an information processing system using the e-bike 10.

Note that, in the drawing, the same reference signs are assigned to portions corresponding to those in Fig. 11, and the description thereof will be omitted below as appropriate.

In Fig. 13, an information processing system 110 includes the e-bike 10, the server 111, and a smartphone 211.

Hence, the information processing system 110 in Fig. 13 is common to the case in Fig. 11 in that the e-bike 10 and the server 111 are included, and is different from the case in Fig. 11 in that the smartphone 211 is newly provided.

In Fig. 11, the e-bike 10 communicates with the server 111 directly, whereas in Fig. 13, the e-bike 10 communicates with the server 111 via the smartphone 211.

In Fig. 13, the smartphone 211 is, for example, the smartphone 211 owned by a user of the e-bike 10, and can be mounted on the e-bike 10 instead of (the touch screen 124 including) the display 91 as described with reference to Fig. 1 and Fig. 2. The smartphone 211 functions as the SoC 121 to the touch screen 124 and the like in Fig. 12.

The smartphone 211 exchanges information with the e-bike 10 by performing communication with a predetermined communication method, for example, Bluetooth (registered trademark) communication. For example, the smartphone 211 receives various types of information such as sensor information from the e-bike 10 and transmits the information to the server 111. Further, for example, the smartphone 211 receives necessary information such as an audio signal of content from the server 111, and transmits the information to the e-bike 10.

Fig. 14 is a block diagram illustrating a second electric configuration example of the e-bike 10.

That is, Fig. 14 illustrates an electric configuration example of the e-bike 10 constituting the information processing system 110 in Fig. 13.

Note that, in the drawing, the same reference signs are assigned to portions corresponding to those in Fig. 12, and the description thereof will be omitted below as appropriate.

In Fig. 14, the e-bike 10 includes the battery 51, the light emission unit 125, the microcontroller 126, the drive unit 127, the haptics unit 128, the sensor unit 129, the audio unit 130, a real time operating system (RTOS) BLE module 221, and the like.

Hence, the e-bike 10 in Fig. 14 is the same as that in Fig. 12 in that the battery 51 and the light emission unit 125 to the audio unit 130 are included. Note that, the e-bike 10 in Fig. 14 is different from that in Fig. 12 in that none of the SoC 121 to the touch screen 124 are provided and the RTOS BLE module 221 is newly provided.

The RTOS BLE module 221 functions as an IF for BLE communication, and performs BLE communication with the smartphone 211 to transmit and receive information.

In Fig. 14, the smartphone 211 functions as the SoC 121 to the touch screen 124 in Fig. 12, and can perform the same as, and/or similar to, the processing of the e-bike 10 in Fig. 12 in combination with the e-bike 10.

In Fig. 14, when the smartphone 211 is detached from the e-bike 10, detecting the position of the e-bike 10 becomes difficult, and thus the sensor unit 129 can be provided with a sensor (Position) for detecting a position like the GPS unit 122 in Fig. 12.

The e-bike 10 in Fig. 12 needs to incorporate the SoC 121 or the like having a function equivalent to a smartphone, and therefore, a high-performance CPU 142 or the like capable of executing various applications or the like is required. Hence, the cost of the e-bike 10 in Fig. 12 becomes high. However, the e-bike 10 in Fig. 12 does not need to prepare the smartphone 211.

On the other hand, in the e-bike 10 in Fig. 14, it is necessary to prepare a mobile terminal such as the smartphone 211 corresponding to the SoC 121 or the like and to make a link (communication or the like) with the e-bike 10. However, since the e-bike 10 in Fig. 14 does not need to make the SoC 121 or the like built-in, the e-bike 10 can be manufactured at low cost.

Note that, regarding the e-bike 10 in Fig. 14, it is possible to make the smartphone 211 be in charge of only communication with the server 111 or the like via a network and communication with the e-bike 10, and to let the e-bike 10, that is, the RTOS BLE module 221 perform, or to let the dedicated hardware provided to the e-bike 10 (a chip simpler than the SoC 121, for example) perform other processing such as execution of an application (including processing of an audio signal processing device 250 described below).

Further, load distribution can be achieved by putting the smartphone 211 also in charge of part of the other pieces of processing, and putting the e-bike 10 in charge of the remaining pieces of processing of the other pieces of processing.

For example, it is possible to put the smartphone 211 in charge of generating a two-channel audio signal, and to put the e-bike 10 in charge of processing of multi-channelization processing, three-way channelization processing, or the like.

Further, for example, it is possible to put the smartphone 211 in charge of executing an application other than the application " Safety", and to put the e-bike 10 in charge of executing the application "Safety". Since the BLE communication is performed between the e-bike 10 and the smartphone 211, when the application " Safety" is executed by the smartphone 211, the sensor information output by the sensor unit 129 needs to be transmitted from the e-bike 10 to the smartphone 211 through the BLE communication. Further, in the smartphone 211, when danger is recognized from the sensor information, it is necessary to generate an audio signal (corresponding to sound) for danger notification and to transmit the audio signal to the e-bike 10 through the BLE communication. Hence, the output of the audio signal for danger notification from the haptics device 61, the speaker 71, and the speakers 81 to 85 of the e-bike 10 is delayed compared with the output of the sensor information by the sensor unit 129 by at least the time required for the BLE communication. When the e-bike 10 executes the application "Safety", it is possible to suppress the occurrence of delay of time required for BLE communication to output the audio signal for danger notification compared with a case that the smartphone 211 executes the application "Safety".

In addition to the execution of the application "Safety", the e-bike 10 can be in charge of processing that is highly important and/or urgent and requires real-time performance in terms of safety and security.

### Audio Signal Processing Device to which Present Technology Is Applied

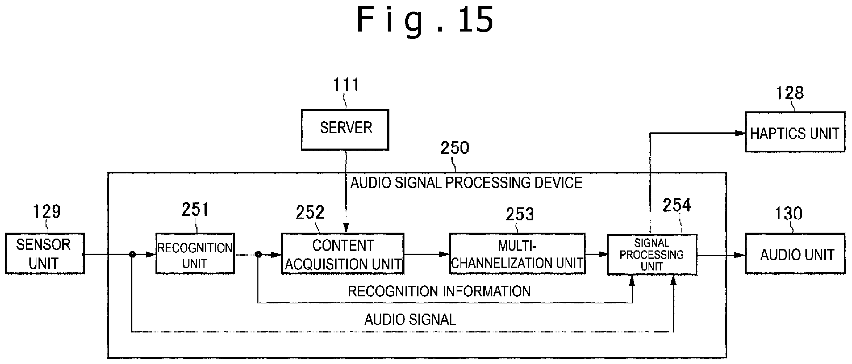

Fig. 15 is a block diagram illustrating a configuration example of an embodiment of an audio signal processing device to which the present technology is applied.

The e-bike 10 functions as a processing device for performing various types of processing with the SoC 121 (Fig. 12) or the smartphone 211 (Fig. 14) as a computer executing various applications.

Fig. 15 illustrates a functional configuration example of the audio signal processing device 250 being one of such processing devices.

The e-bike 10 provides an acoustic space to a user in a state of riding the e-bike 10 by outputting an audio signal of content and the like. However, when the e-bike 10 outputs an audio signal, sound leakage to the surroundings occurs, which may cause a nuisance to people in the surroundings. Further, a user of the e-bike 10 may be concerned about such nuisance to people in the surroundings and may not be able to enjoy the content.

As a first method of suppressing the sound leakage, there is a method of canceling the sound in an area other than the area of interest. Specific method of the first method includes, for example, a method of using vertical array speakers in which a plurality of speaker units (component for outputting an electric signal as air vibration in a speaker) are vertically arranged. In addition, for example, there are a technique called area noise canceling and control of an area where sound reaches by wave field synthesis.

However, in the first method, control of the directivity of an audio signal is easy for a high-range component having a short wavelength, but is difficult for a low-range component having a long wavelength.

A second method for suppressing the sound leakage is a method using a technique for achieving narrow directivity. Specific method of the second method includes, for example, a method of using horizontal array speakers in which a plurality of speaker units are horizontally arranged, a method of using a bone flare, a method of using a beam tweeter, and a method of using a parabolic dome.

However, in the second method, in order to achieve narrow directivity, a certain size is required as the size of a speaker, and the speaker becomes large. Further, in the second method, the reproduction band is narrowed.

A third method for suppressing sound leakage is to lower the sound pressure level and reduce the area where the sound reaches by distance attenuation. Specific method of the third method includes, for example, a method of using a wearable speaker such as a neck band type speaker in which a speaker unit can be disposed near the ears of a user.

However, in the third method, when the speaker is disposed in the e-bike 10 such that the speaker unit is disposed near the ears of a user as in a neck speaker, there arises many restrictions such as inconvenience in getting on and off the e-bike 10, for example. Further, when letting a user wear a wearable neck speaker, the user is burdened with wearing. Furthermore, as the disposition of the speakers at the positions close to the ears, for example, there is a disposition of two-channel speakers just beside the left and right ears of a user, but in the case of such disposition of the speakers, when the position of the head of the user riding the e-bike 10 is shifted, a stereophonic sound field generated by signal processing may be collapsed. Specifically, in order to teach the position of an emergency vehicle for which real-time performance is important, when an emergency vehicle approaches from the right rear, for example, there is generated a sound field by signal processing, the sound field in which a stereophonic expression is performed as if notification sound for giving notice of approach of the emergency vehicle is emitted on the right rear. With this case, the user naturally turns his/her head to the right rear. At this time, the position of the head (position of the ears) of the user is shifted, and thus the stereophonic expression is collapsed, and the notification sound may not be heard from the right rear.

Hence, the audio signal processing device 250 performs three-way channelization processing, for example, for generating a plurality of frequency components of an audio signal as if the audio signal is band-divided into a plurality of frequency bands. The audio signal processing device 250 causes the device in charge of each frequency band among the haptics device 61, the speaker 71, and the speakers 81 to 85 to output each frequency component of the audio signal obtained by the three-way processing. Furthermore, in the e-bike 10, the disposition of the haptics device 61, the speaker 71, and the speakers 81 to 85 is devised as described with reference to Fig. 1 and Fig. 2. Thus, sound leakage to the surroundings can be suppressed. As a result, a user can have a comfortable cycling experience surrounded by sound without concerning about sound leakage to the surroundings while the e-bike 10 is running.

Further, in the e-bike 10, one or both of the state of a user and the situation of surroundings are recognized based on the sensor information output by the sensor unit 129, and the audio signal level (volume of the sound corresponding to the audio signal) is adjusted based on the recognition result. By adjusting the audio signal level, the range of sound leakage is dynamically controlled without a user taking an action of operating the volume, and in addition, the easiness of hearing the sound of surroundings by a user in a state of riding the e-bike 10 is controlled.

For example, when required to have care on sound leakage to the surroundings, the e-bike 10 enters a silent state in consideration of the direction in which the care is required. That is, the audio signal level is adjusted so as to further suppress the sound leakage to the direction in which the care is required. Hence, a user does not need to worry about sound leakage in the direction in which care on sound leakage is required.

When care on easiness to hear the sound of surroundings is required for a user of the e-bike 10, the e-bike 10 enters the silent state in consideration of the direction in which the care is required. That is, the audio signal level is adjusted such that a user of the e-bike 10 can easily hear sound from a direction that requires care, for example, the sound of an automobile from a direction in which the automobile is approaching, or speech (voice) of a person riding a bicycle running side by side (person running side by side). Hence, it is possible to enhance safety against the approach of an automobile and to make a conversation with a person running side by side easy.

In Fig. 15, the audio signal processing device 250 includes a recognition unit 251, a content acquisition unit 252, a multi-channelization unit 253, and a signal processing unit 254.

The recognition unit 251 is supplied with sensor information output by the sensor unit 129. The recognition unit 251 recognizes one or both of the state of a user of the e-bike 10 (including the state of the e-bike 10 on which the user is riding) and the situation of surroundings based on the sensor information, and supplies recognition information representing the recognition result to the content acquisition unit 252 and the signal processing unit 254.

For example, the recognition unit 251 recognizes (detects, determines) the presence or absence of a speech of a user as a state of the user based on an audio signal as sensor information output by the microphone constituting the sensor unit 129. For example, the recognition unit 251 recognizes the running speed of a user (of the e-bike 10 on which a user is riding) as a state of the user based on the sensor information output by the IMU constituting the sensor unit 129. For example, the recognition unit 251 recognizes whether a user (the e-bike 10 on which a user is riding) is running or stopped as a state of the user based on sensor information output by a sensor for detecting a state of the stand of the e-bike 10. For example, the recognition unit 251 recognizes whether a user is sitting or standing, the posture of the user, or the like, for example, as a state of the user based on the pressure as the sensor information output by the pressure sensor provided to the seat 31, the backrest 32, the handle 41, or the like constituting the sensor unit 129.

For example, the recognition unit 251 recognizes the presence or absence of speech of another person in the surroundings, specific sound such as sound for giving notice of danger, including the sound of an automobile approaching the e-bike 10 (an engine sound, a sound of a horn, a siren sound of an emergency vehicle, or the like), or the like as a situation of surroundings, based on an audio signal as sensor information output by a microphone constituting the sensor unit 129. Further, for example, the recognition unit 251 recognizes an approach of an automobile or the like from the rear or the like as a situation of surroundings, based on an image (including a distance image) as sensor information output by a camera or a distance measurement sensor constituting the sensor unit 129. Note that, the recognition unit 251 can recognize, based on an audio signal, a direction in which a sound source is positioned with azimuth analysis for analyzing a direction in which a sound source of a speech (another person), a sound source of a specific sound (an automobile or the like) is positioned, in addition to recognizing the presence or absence of a speech of another person in the surroundings and a specific sound or the like.

The content acquisition unit 252 acquires an audio signal of content such as music suitable for a situation of surroundings (scenery or the like) or a sound effect suitable for a state of the e-bike 10 or the like, for example, based on the recognition information from the recognition unit 251. Acquisition of an audio signal of content is performed by receiving from the server 111, reading from a memory (not illustrated) built in the e-bike 10, or generating. The generation of content can be performed by, for example, a generative AI or any other method. The content acquisition unit 252 acquires a two-channel audio signal of content and supplies the acquired audio signal to the multi-channelization unit 253.

The memory built in the e-bike 10 can store, for example, an audio signal of a predetermined sound effect as content, and the like. The predetermined sound effect is, for example, a sound that can be produced when the stand of the e-bike 10 is kicked up, the sound that beats out a rhythm in response to the running speed of the e-bike 10, or the like.

The multi-channelization unit 253 performs multi-channelization processing of generating a multi-channel audio signal from an audio signal of content from the content acquisition unit 252. Here, in the multi-channelization processing, a seven-channel audio signal for the haptics device 61, the speaker 71, and the speakers 81 to 85 is generated from a two-channel audio signal of content from the content acquisition unit 252. In the multi-channelization processing, for example, a 5.1-channel audio signal is generated from a two-channel audio signal, and a seven-channel audio signal can be generated from the 5.1-channel audio signal. The multi-channelization unit 253 supplies the multi-channel audio signal of content obtained by the multi-channelization processing to the signal processing unit 254.

The signal processing unit 254 performs signal generation processing for generating a plurality of frequency components of an audio signal from a (multi-channel) audio signal of content from the multi-channelization unit 253. The signal generation processing is performed by filter processing (applying equalizer) on an audio signal of each channel, for example. The filter processing is performed by using a low-pass filter or a high-pass filter, or both a low-pass filter and a high-pass filter. As the signal generation processing, three-way channelization processing for generating low-range component, mid-range component, and high-range component of an audio signal of content can be performed, for example. In three-way channelization processing, an audio signal of a channel for the haptics device 61 is subjected to a low-pass filter, and an audio signal of a channel for the speaker 71 is subjected to both a low-pass filter and a high-pass filter. Further, an audio signal of a channel for the speakers 81 to 85 is subjected to a high-pass filter. As a result, three frequency components of a low-range component, a mid-range component, and a high-range component of an audio signal of content are generated.

The signal processing unit 254 performs signal processing required for a low-range component, a mid-range component, and a high-range component of an audio signal of content. The signal processing unit 254 supplies a low-range component of an audio signal obtained as a result of the signal processing to the haptics device 61 in charge of (reproduction of) the low-range component of the audio signal in the haptics unit 128. The signal processing unit 254 supplies a mid-range component of an audio signal obtained as a result of the signal processing to the speaker 71 serving as a mid-range speaker in charge of (reproduction of) the mid-range component of the audio signal in the audio unit 130. The signal processing unit 254 supplies a high-range component of an audio signal obtained as a result of the signal processing to the speakers 81 to 85 serving as high-range speakers in charge of (reproduction of) the high-range component of the audio signal in the audio unit 130.

Note that, here, the three-way channelization processing of generating three frequency components of a low-range component, a mid-range component, and a high-range component from an audio signal of content is performed as the signal generation processing, but the signal generation processing is not limited thereto. In the signal generation processing, two frequency components, that is, a low-range component and a high-range component, can be generated from an audio signal of content, or four or more frequency components can be generated. For example, in the signal generation processing, when two frequency components of a low-range component and a high-range component of an audio signal of content are generated, the e-bike 10 can be configured such that the speaker 71 is in charge of the high-range component together with the speakers 81 to 85, only the speaker 71 is in charge of the high-range component without providing the speakers 81 to 85, or the speakers 81 to 85 are in charge of the high-range component without providing the speaker 71.

### Configuration Example of Signal Processing Unit 254

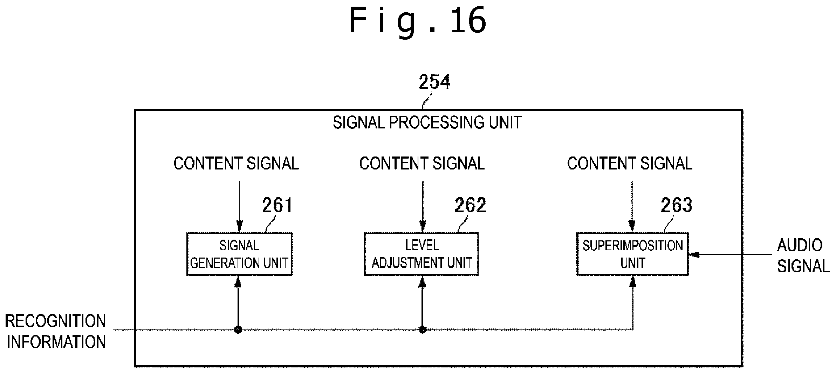

Fig. 16 is a block diagram illustrating a configuration example of the signal processing unit 254 in Fig. 15.

Hereinafter, an audio signal of content is also referred to as a content signal.

In Fig. 16, the signal processing unit 254 includes a signal generation unit 261, a level adjustment unit 262, and a superimposition unit 263.

Recognition information from the recognition unit 251 and a (multi-channel) content signal from the multi-channelization unit 253 are supplied to the signal generation unit 261. The signal generation unit 261 generates, as signal generation processing, a low-range component, a mid-range component, and a high-range component of a content signal by performing three-way channelization of the content signal. Further, the signal generation unit 261 generates a haptics signal for driving the haptics device 61 based on a low-range component of a content signal and recognition information.

In the generation of the haptics signal, the haptics signal can be generated by performing filter processing on a low-range component based on the low-range component of a content signal. For example, for a content signal of an unknown content (sound source) such as content generated by generative AI or the like, a haptics signal is generated based on the low-range component of the content signal.

The generation of a haptics signal can be performed by reading out the haptics signal from a memory (not illustrated) built in the e-bike 10, for example. That is, for example, as for a haptics signal of known content (sound source), an effective haptics signal created in advance can be stored in a memory built in the e-bike 10. The reading out of the haptics signal from the memory, then, can be performed as the generation of the haptics signal. The known content includes a sound effect that is produced when the stand of the e-bike 10 is kicked up, a sound effect that beats out a rhythm in response to the running speed of the e-bike 10, and content prepared in advance such as content of music received from the server 111, for example. The signal generation unit 261 can recognize kicking up of the stand of the e-bike 10 or the running speed of the e-bike 10 from the recognition information. The signal generation unit 261 generates a haptics signal such as a sound effect that is produced when the stand of the e-bike 10 is kicked up, or a sound effect that beats out a rhythm in response to the running speed of the e-bike 10, depending on recognition information on kicking up of the stand of the e-bike 10, the running speed of the e-bike 10, or the like.

Further, the signal generation unit 261 can generate a mid-range component delayed compared with a high-range component of a content signal by delaying the mid-range component of the content signal. As the delay time for delaying the mid-range component, the time for which the precedence effect (Haas effect) occurs, for example, time of greater than 0 seconds and 0.04 seconds or less can be adopted.

The recognition information from the recognition unit 251, and a low-range component (a haptics signal corresponding thereto), a mid-range component, and a high-range component of a content signal generated by the signal generation unit 261 are supplied to the level adjustment unit 262. The level adjustment unit 262 adjusts the levels of the mid-range component and the high-range component of a content signal such that the sound pressures of the mid-range component and the high-range component of the content signal become substantially the same at the position of a user riding the e-bike 10. The low-range component of a content signal (the haptics signal corresponding thereto) is also adjusted such that the sound pressure felt by a user with the vibration of the haptics device 61 in response to the low-range component becomes substantially the same as the sound pressure of the mid-range component and the high-range component. Further, the level adjustment unit 262 adjusts the level of the high-range component of a content signal based on the recognition information.

The recognition information from the recognition unit 251, the high-range component of a content signal generated by the signal generation unit 261, and an audio signal detected (collected) by the microphone constituting the sensor unit 129 are supplied to the superimposition unit 263. When recognizing danger such as the approach of an automobile to the e-bike 10 based on the recognition information, the superimposition unit 263 superimposes the audio signal of danger notification sound for giving notice of danger on the high-range component of a content signal. For example, the superimposition unit 263 separates the audio signal of the sound of an automobile approaching the e-bike 10 from the audio signal from the sensor unit 129. Further, the superimposition unit 263 enhances the audio signal of the sound of an automobile, and superimposes the audio signal of the sound of an automobile after the enhancement as the audio signal of danger notification sound on the high-range component of a content signal.

### Three-Way Channelization Processing

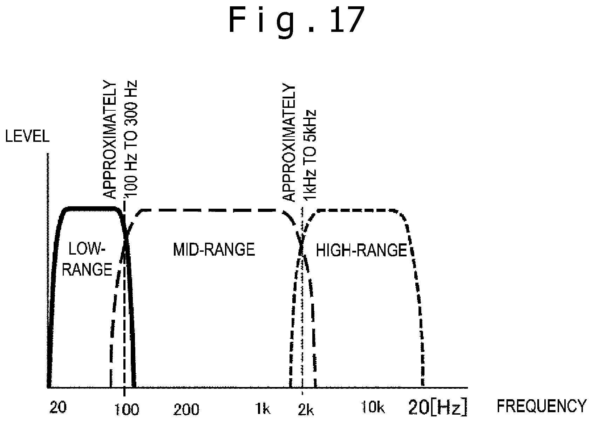

Fig. 17 is a diagram for explaining an example of three-way channelization processing performed by the signal generation unit 261.

With the three-way channelization processing, a low-range component, a mid-range component, and a high-range component are generated as if a content signal is band-divided into the low-range component, the mid-range component, and the high-range component.

The low-range component is, for example, a frequency component of approximately 100 Hz to 300 Hz or lower. The mid-range component is a frequency component of approximately 100 Hz to 300 Hz or higher and approximately 1 kHz to 5 kHz or lower. The high-range component is a frequency component of approximately 1 kHz to 5 kHz or higher.

The low-range component of a content signal is output by supplying the low-range component (the haptics signal corresponding thereto) to the haptics device 61 disposed to the backrest 32 with which the back, being likely to feel vibration even while the e-bike 10 is running, comes into contact.

The mid-range component of a content signal is output by supplying the mid-range component to the speaker 71 serving as a mid-range speaker disposed to face the direction of (the head (ears) of) a user in a state of riding the e-bike 10 and to be positioned in front of and below the user.

The high-range component of a content signal is output by supplying the high-range component to the speakers 81 to 85 serving as high-range speakers disposed to face the direction of (the head (ears) of) a user in a state of riding the e-bike 10 and to be positioned at a height near the height of the ears of the user. Note that, as described with reference to Fig. 1 and Fig. 2, the speakers 81 to 83 are supported by the support 80 fixed to the handle 41, and the speakers 84 and 85 are supported by the backrest 32. The speakers 81 to 85 can be disposed near the ears of a user in a state of riding the e-bike 10 within a range that does not greatly disturb the user in getting on and off the e-bike 10.

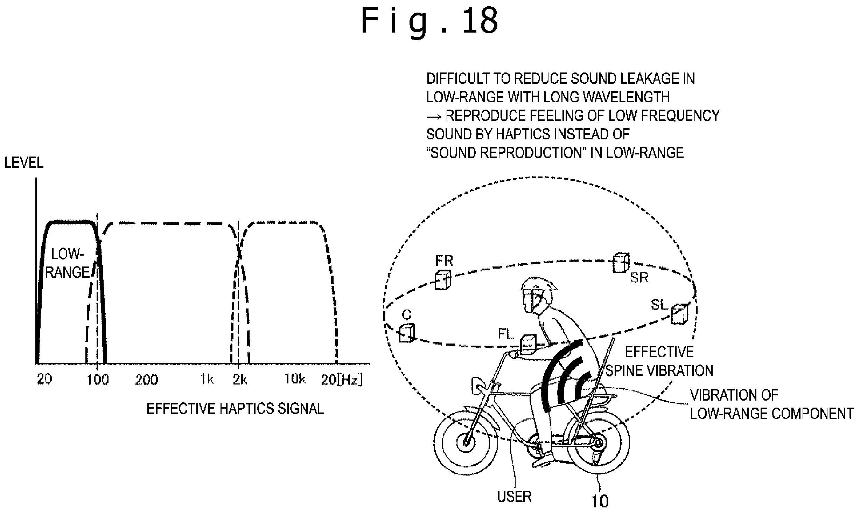

Fig. 18 is a diagram for explaining output of a low-range component of a content signal by the haptics device 61.

When a low-range component of a content signal having a long wavelength is output from a speaker, it is difficult to suppress the sound leakage. Here, outputting the low-range component of a content signal as the vibration of the haptics device 61 disposed to the backrest 32 makes it possible to suppress the sound leakage. The spine (back) of a user is vibrated by the vibration of the haptics device 61 disposed to the backrest 32, and the user can feel the low-range component of a content signal as sound (like sound) by the stimulation of the tactile sense.

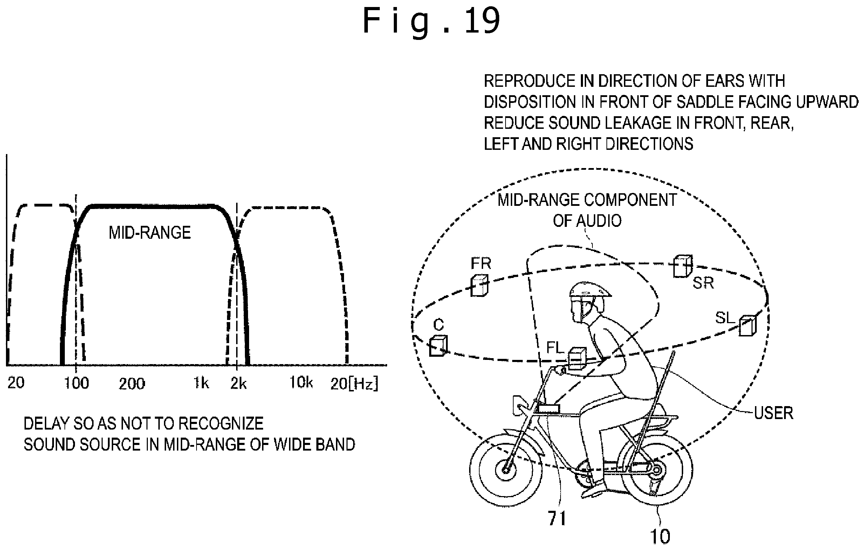

Fig. 19 is a diagram for explaining output of a mid-range component of a content signal by the speaker 71 serving as a mid-range speaker.

The mid-range component of a content signal is output from the speaker 71 disposed to face the direction of a user in a state of riding the e-bike 10 and to be positioned in front of and below the user. Hence, the mid-range component of a content signal is output from the speaker 71 positioned in front of and below the user to a diagonally upward direction toward the rear of the e-bike 10. As a result, it is possible to suppress sound leakage in front, rear, left, and right directions of the e-bike 10.

As described with reference to Fig. 16, the signal generation unit 261 generates a mid-range component delayed compared with a high-range component of a content signal. This makes a high-range component of content reach a user in a state of riding the e-bike 10 earlier than a mid-range component of the content. As a result, because of the precedence effect, a user can recognize the sound image not at the position of the speaker 71 serving as the mid-range speaker for outputting the mid-range component, but at the positions of the speakers 81 to 85 serving as the high-range speakers for outputting the high-range component.

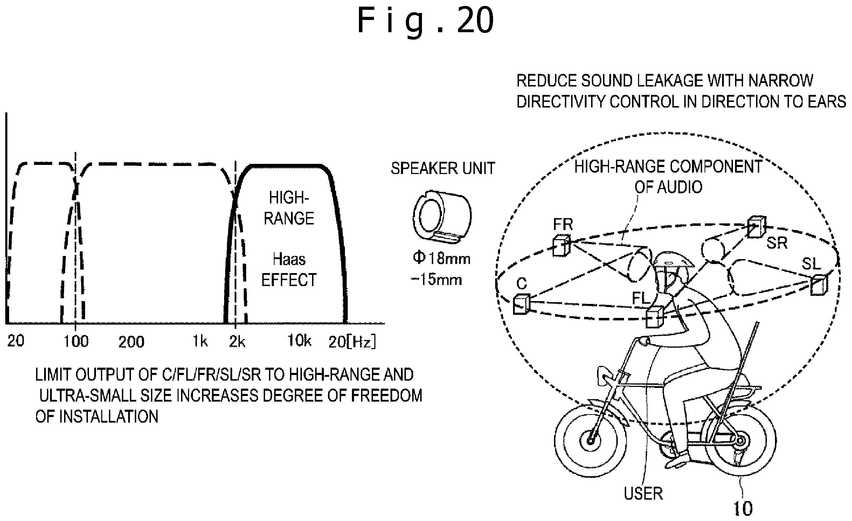

Fig. 20 is a diagram for explaining output of a high-range component of a content signal by the speakers 81 to 85 serving as high-range speakers.

The high-range component of a content signal is output from the speakers 81 to 85 serving as high-range speakers disposed to face the direction of a user in a state of riding the e-bike 10 and to be positioned at a height near the height of the ears of the user.

Control of a narrow directivity is easy for a high-range component, and by outputting such high-range component from the speakers 81 to 85 disposed to face the direction of a user in a state of riding the e-bike 10 and to be positioned at a height near the height of the ears of the user, it is possible to suppress sound leakage to the surroundings. Further, as described with reference to Fig. 16 and Fig. 19, the mid-range component of a content signal is delayed compared with the high-range component, and thus the high-range component reaches the user earlier than the mid-range component of content. As a result, the precedence effect allows a user to recognize a sound image at the positions of the speakers 81 to 85 serving as the high-range speakers for outputting the high-range component.

Note that a high-range speaker for outputting a high-range component can be configured by a small speaker unit having a diameter of approximately 15 mm to 18 mm. Hence, a small speaker can be adopted as the speakers 81 to 85 serving as high-range speakers, and the degree of freedom of disposition increases by adopting the small speaker like the above.

Here, the frequency band of each frequency component of an audio signal (content signal) generated in the three-way channelization processing as the signal generation processing, and disposing positions and disposing angles of the speaker 71 serving as a mid-range speaker and the speakers 81 to 85 serving as high-range speakers are not limited to those described above. That is, the present technology can be applied to various types of mobile objects other than a bicycle. In applying the present technology to various types of mobile objects, the frequency band of each frequency component of an audio signal generated in the three-way channelization processing, and the disposing positions and the disposing angles of a mid-range speaker and a high-range speaker can be set so as to suppress the sound leakage depending on the mobile object to which the present technology is applied.

Further, although the signal generation unit 261 delays the mid-range component of a content signal, (the haptics signal corresponding to) the low-range component can also be delayed in the same manner in addition to the mid-range component. For the low-range component, for example, the presence or absence of a delay can be set depending on the disposing position of the haptics device 61 for outputting the low-range component. That is, the haptics device 61 can be disposed at a position other than the backrest 32, the position where the vibration by the haptics device 61 can stimulate the tactile sense of a user in a state of riding the e-bike 10. Presence or absence of a delay of the low-range component can be set depending on the disposing position of the haptics device 61.

Here, the audio signal (content signal) is three-way channelized into three frequency components of a low-range component, a mid-range component, and a high-range component, and the low-range component is output from the haptics device 61 disposed to the backrest 32 that comes into contact with a user. Further, the mid-range component is output from the speaker 71 disposed to face a user and in front of and below the user, and the high-range component is output from the speakers 81 to 85 disposed to face the user at a height near the height of the ears of the user.

The sound leakage can be suppressed by any one or two of outputting the low-range component from the haptics device 61, outputting the mid-range component from the speaker 71 disposed to face a user and in front of and below the user, and outputting the high-range component from the speakers 81 to 85 disposed to face the user at a height near the height of the ears of the user. The effect of suppressing the sound leakage is larger when two are performed than when one is performed, and the effect of suppressing the sound leakage is further larger when three are performed than when two are performed.

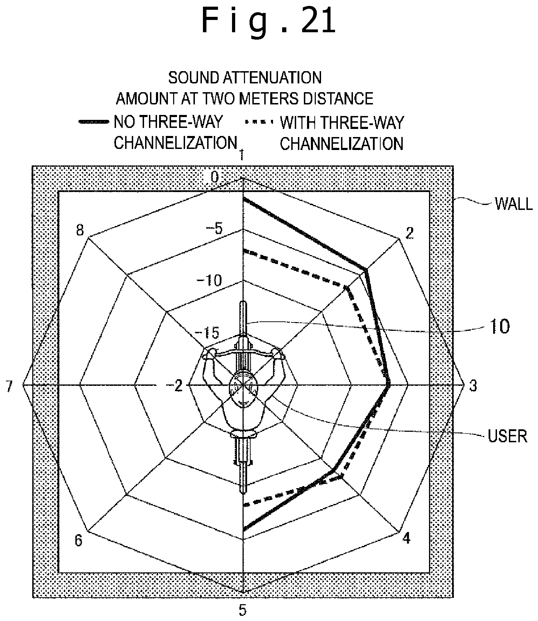

Fig. 21 is a diagram for explaining the degree of suppression of sound leakage by the three-way channelization.

Fig. 21 illustrates measurement results of an attenuation amount of sound when the three-way channelization is performed and is not performed, at a position two meters apart from a user riding the e-bike 10. In Fig. 21, the attenuation amount is indicated by a negative value (dB).

For example, at a position just behind a user, when the three-way channelization is not performed, the attenuation amount is approximately 5 dB, whereas when the three-way channelization is performed, the attenuation amount is approximately 7.5 dB. Hence, it can be confirmed that the attenuation amount is larger by approximately 2.5 dB when the three-way channelization is performed than when the three-way channelization is not performed and the sound leakage is suppressed.

Note that, the measurement of the attenuation amount is performed in a room with walls, and therefore, is affected by reflection and standing waves of sound. Nevertheless, with the measurement result, it can still be confirmed that sound leakage is suppressed in most of the surroundings of a user riding the e-bike 10.

Here, the disposing positions of the haptics device 61, the speaker 71 serving as the mid-range speaker, and the speakers 81 to 85 serving as the high-range speakers are not limited to the above-described disposing positions. Further, the high-range speakers are not limited to the speakers 81 to 85.

For example, the haptics device 61 can be disposed at any position where vibration by the haptics device 61 can stimulate the tactile sense of a user in a state of riding. For example, the haptics device 61 can be disposed on the seat 31 with which the buttocks of a user come into contact or to the handle 41 with which the palm of a user comes into contact, other than the backrest 32. Further, as the haptics device 61, a plurality of haptics devices can be disposed at a plurality of positions.

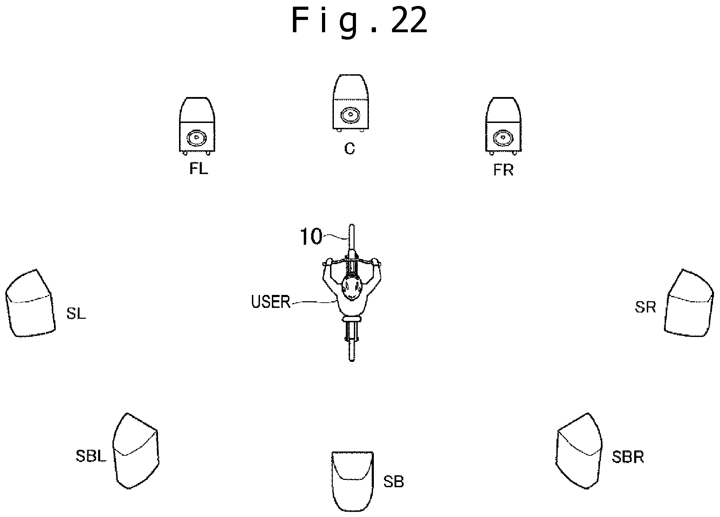

Fig. 22 is a diagram illustrating the disposition of high-range speakers and the names of the high-range speakers.

The high-range speaker is disposed at a height near the height of the ears of a user riding the e-bike 10.

The high-range speaker disposed at the position in the front direction of a user riding the e-bike 10 is also referred to as a speaker C, and the high-range speakers disposed at the position in the front left direction and the position in the front right direction of the user are also respectively referred to as a speaker FL and a speaker FR.

The high-range speakers disposed at the position on the left (slightly rear) of a user and the position on the right (slightly rear) of the user are also respectively referred to as a speaker SL and a speaker SR.

The high-range speaker disposed at the position in the direction just behind a user is also referred to as a speaker SB, and the high-range speakers disposed at the position on the rear left direction and the position on the rear right direction of the user are also respectively referred to as a speaker SBL and a speaker SBR.

As the high-range speakers, in addition to the speakers 81 to 85 corresponding to the speakers C, FL, FR, SL, and SR of five channels, for example, speakers FL, C, FR, SR, SL, SBR, and SBL of seven channels, or speakers FL, FR, SR, SL, SBR, and SBL of six channels can be adopted. In addition, as the high-range speakers, for example, four-channel speakers FL, FR, SR, and SL, three-channel speakers FL, FR, and SB, three-channel speakers C, SR, and SL, two-channel speakers C and SB, and the like can be adopted.

### Level Adjustment of Content Signal by Level Adjustment Unit 262

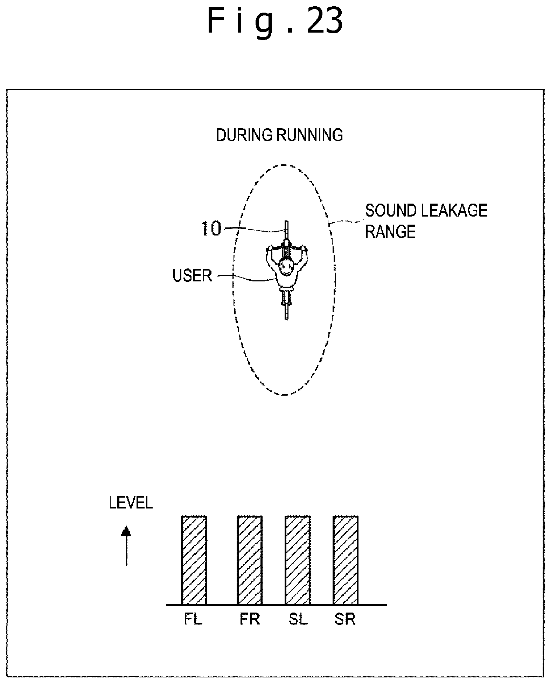

Fig. 23 is a diagram for explaining a first example of level adjustment of a high-range component of a content signal by the level adjustment unit 262 based on recognition information.

In the following, level adjustment of a high-range component of a content signal output by the speakers FL, FR, SL, and SR will be described, assuming that the e-bike 10 has four-channel speakers FL, FR, SL, and SR corresponding to the speakers 82 to 84 serving as high-range speakers. Note that, as the high-range speakers for outputting the high-range component of an audio signal to be subjected to the level adjustment, for example, the seven-channel speakers FL, C, FR, SR, SL, SBR, and SBL can be adopted in addition to the four-channel speakers FL, FR, SL, and SR. In addition, for example, six-channel speakers FL, FR, SR, SL, SBR, and SBL, five-channel speakers FL, C, FR, SR, and SL, three-channel speakers FL, FR, and SB, three-channel speakers C, SR, and SL, two-channel speakers C and SB, and the like can be adopted.

Fig. 23 illustrates an example of the level adjustment of the high-range component of a content signal when recognition information indicates that no object is present in a predetermined range of the surroundings of the e-bike 10.

When there is no object in the surroundings of the e-bike 10, the levels of the high-range components of a content signal output from the speakers FL, FR, SL, and SR can be adjusted to substantially the same level such that a sound leakage range becomes a predetermined range set in advance. The substantially the same level means that the sound pressure at the position of a user in a state of riding the e-bike 10 is substantially the same. The sound leakage range is a range in which the level of the sound corresponding to a content signal is equal to or higher than a predetermined value. The predetermined value can be set, by performing sensory evaluation, for example, to a maximum level of sound that a person does not perceive as a nuisance. The predetermined value can be controlled to a large value when the level of environmental sound is high, and controlled to a small value when the level of environmental sound is low, based on the level of environmental sound of the surroundings.

Hereinafter, the level of the high-range component of a content signal output by the speakers FL, FR, SL, and SR when no object is present in the surroundings of the e-bike 10 is also referred to as a default level.

The level adjustment unit 262 lowers the level of the high-range component of a content signal output by all or part of the speakers FL, FR, SL, and SR based on recognition information.

For example, the level adjustment unit 262 can lower, as care for sound leakage to the surroundings, the level of the high-range component of a content signal output by a speaker, among the speakers FL, FR, SL, and SR, positioned in the direction opposite to the direction in which the suppression of sound leakage is desired in a view from a user in a state of riding the e-bike 10.

In consideration of the directivity of the speakers FL, FR, SL, and SR, that is, the fact that the speakers FL, FR, SL, and SR are facing the direction of a user, when lowered is the level of the high-range component of an audio signal output by the speaker positioned in the direction opposite to the direction in which the suppression of sound leakage is desired, the sound leakage range is reduced in the direction in which the suppression of sound leakage is desired and the sound leakage is suppressed.

Further, for example, as care to a user for easiness of hearing the sound of surroundings, the level adjustment unit 262 can lower the level of the high-range component of a content signal output from a speaker, among the speakers FL, FR, SL, and SR, positioned in a direction in which the user desires to hear the sound of surroundings in a view from the user in a state of riding the e-bike 10.

In consideration of the directivity of the speakers FL, FR, SL, and SR, that is, the fact that the speakers FL, FR, SL, and SR are facing the direction of a user, when lowered is the level of the high-range component of a content signal output by the speaker positioned in the direction in which the user desires to hear the sound of surroundings, the user can easily hear the sound in the direction in which the user desires to hear the sound of surroundings.

The level adjustment of the high-range component of a content signal as care to the sound leakage to the surroundings and the level adjustment of the high-range component of a content signal as care to a user for easiness of hearing the sound of surroundings as described above can be performed not only by one but also by both at the same time.

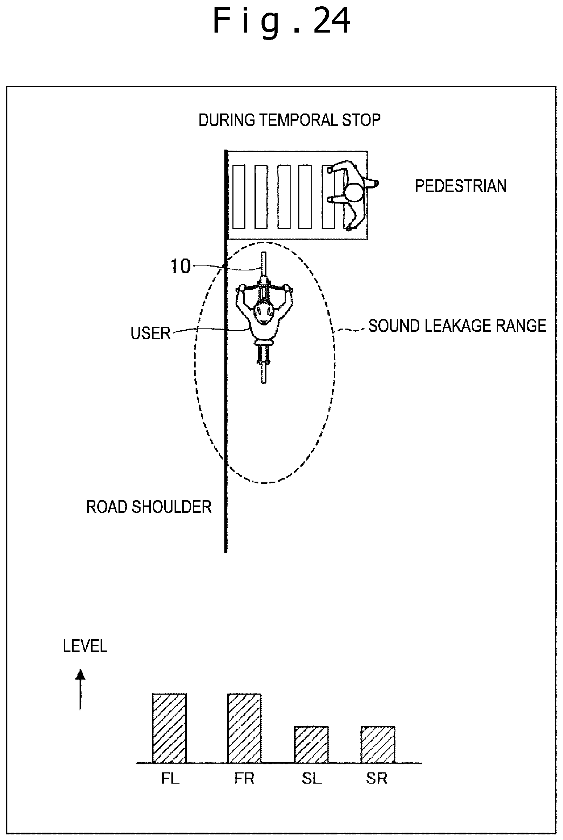

Fig. 24 is a diagram for explaining a second example of level adjustment of a high-range component of a content signal by the level adjustment unit 262 based on recognition information.

Fig. 24 illustrates an example of the level adjustment of the high-range component of a content signal when recognition information indicates that the e-bike 10 has made a temporal stop before a crosswalk or indicates that a person (pedestrian) is present in front of the e-bike 10 making a temporal stop.

When the e-bike 10 has made a temporal stop before a crosswalk or when a person is present in front of the e-bike 10 making a temporal stop, the direction in which the suppression of sound leakage is desired is the front side where the crosswalk or the person is present. Hence, the level of the high-range component of a content signal output from the speakers SL and SR, for example, positioned in the opposite direction of the front direction can be adjusted to be lower than the default level (by a predetermined value).

In the case above, the sound leakage range in front is reduced, and when a pedestrian is crossing a crosswalk, the sound leakage to the pedestrian or a person present in front can be suppressed.

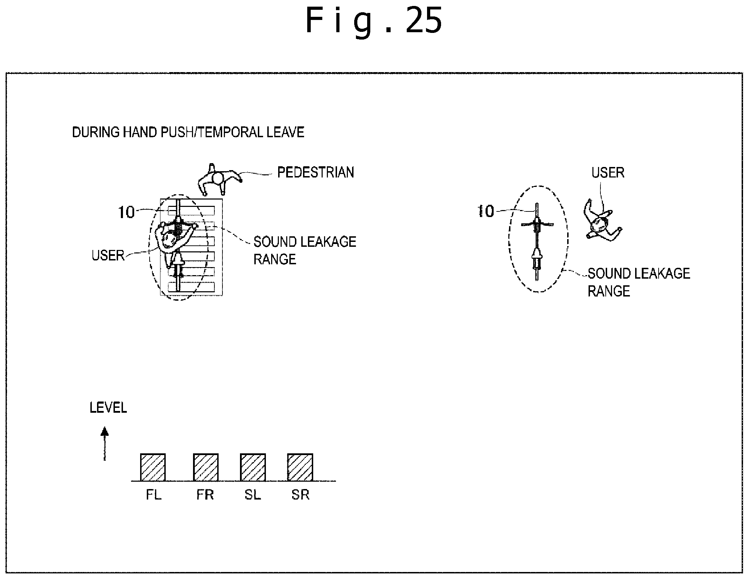

Fig. 25 is a diagram for explaining a third example of level adjustment of a high-range component of a content signal by the level adjustment unit 262 based on recognition information.

Fig. 25 illustrates an example of the level adjustment of the high-range component of a content signal when recognition information indicates that a user gets off the e-bike 10 and pushes the e-bike 10 with hands or indicates that the user moves away from the e-bike 10.

When a user gets off the e-bike 10 and pushes the e-bike 10 with hands, or when a user moves away from the e-bike 10, it is appropriate to suppress sound leakage in all directions of the e-bike 10. Hence, the levels of the high-range component of a content signal output from, for example, all the speakers FL, FR, SL, and SR each positioned in the opposite direction of each direction of all directions can be adjusted to be lower than a default level.

In the case above, the sound leakage range in all directions in the surroundings of the e-bike 10 is reduced, and the sound leakage to a person who is present near the e-bike 10 can be suppressed.

When a user moves away from the e-bike 10, the output of the high-range component of a content signal from the speakers FL, FR, SL, and SR can be stopped as the level adjustment of the high-range component of a content signal output from the speakers FL, FR, SL, and SR.

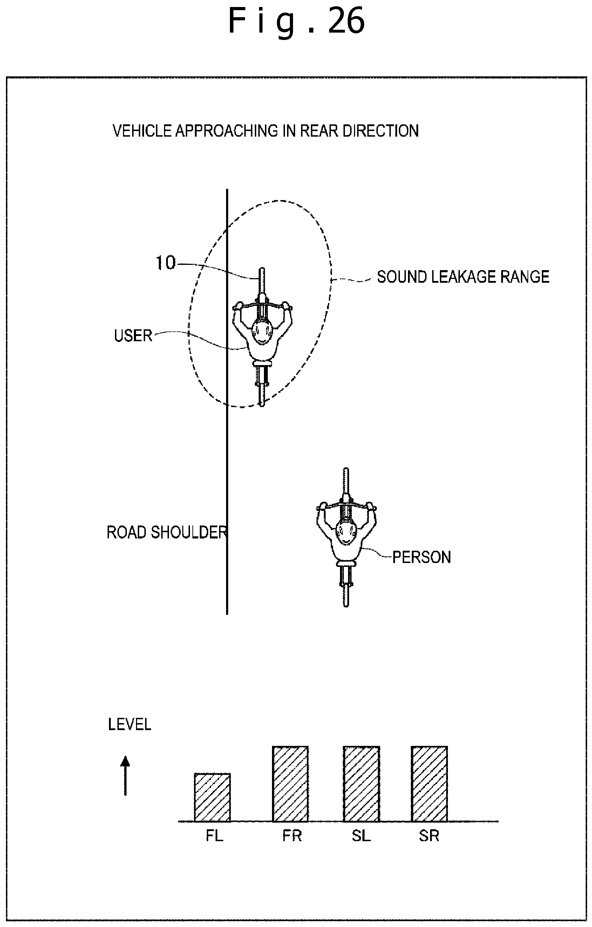

Fig. 26 is a diagram for explaining a fourth example of level adjustment of a high-range component of a content signal by the level adjustment unit 262 based on recognition information.

Fig. 26 illustrates an example of the level adjustment of the high-range component of a content signal when recognition information indicates that a person is approaching from the right rear direction of the e-bike 10 during running.

When a person is approaching from the right rear direction of the e-bike 10 during running, for example, when a person riding a bicycle or a kick scooter is approaching, the direction in which the suppression of sound leakage is desired is the right rear direction from which the person is approaching. Hence, the level of the high-range component of a content signal output from, for example, the speaker FL positioned in the opposite direction of the right rear direction can be adjusted to be lower than the default level.

In the case above, the sound leakage range on the right rear is reduced, and the sound leakage to a person approaching from the right rear direction can be suppressed.

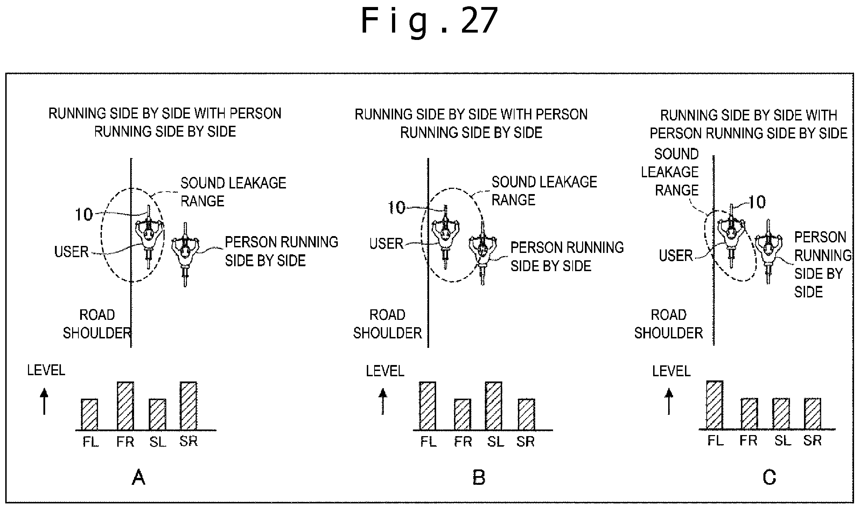

Fig. 27 is a diagram for explaining a fifth example of level adjustment of a high-range component of a content signal by the level adjustment unit 262 based on recognition information.

Fig. 27 illustrates an example of the level adjustment of the high-range component of a content signal when recognition information indicates that a person is running alongside the e-bike 10 during running, and the person running alongside (person running side by side) and a user have a conversation.

When a user has a conversation with a person running side by side present on the right side of the e-bike 10 during running, for example, when a friend as a person running side by side rides a bicycle, runs on the right side of the e-bike 10 during running, and has a conversation with the user, the direction in which the suppression of sound leakage is desired is the right direction in which the person running side by side is present. Hence, the level of the high-range component of a content signal output by the speakers FL and SL, for example, positioned in the opposite direction of the right direction can be adjusted to be lower than the default level.

In the case above, as illustrated in A of Fig. 27, the sound leakage range in the right direction is reduced, and the sound leakage to a person running side by side in the right direction can be suppressed.

Further, when a user has a conversation with a person running side by side present on the right side of the e-bike 10 during running, the direction in which the user desires to hear the sound of surroundings is the right direction in which the person running side by side is present. Hence, as illustrated in B of Fig. 27, the level of the high-range component of a content signal output by the speakers FR and SR, for example, positioned in the right direction can be adjusted to be lower than the default level.

Lowering the level of the high-range component of a content signal output from the speakers FR and SR positioned in the right direction makes it easy for a user to hear the voice (speech) of a person running side by side present in the right direction.

The level adjustment of the high-range component of a content signal for suppressing the sound leakage to a person running side by side in the right direction and the level adjustment of the high-range component of a content signal for making it easy for a user to hear the voice of the person running side by side in the right direction as described above can be performed at the same time.

For example, as illustrated in C of Fig. 27, the level of the high-range component of a content signal output by the speaker SL, for example, positioned in the opposite direction of the right direction, being the direction in which the suppression of sound leakage is desired, in which a person running side by side is present can be adjusted to be lower than the default level. At the same time, as illustrated in C of Fig. 27, the level of the high-range component of a content signal output from the speakers FR and SR, for example, positioned in the right direction, being the direction in which a user desires to hear the sound of surroundings, in which a person running side by side is present can be adjusted to be lower than the default level.

In the case above, as illustrated in C of Fig. 27, the sound leakage range to the front right is reduced, and the sound leakage to a person running side by side in the right direction can be suppressed. At the same time, lowering the level of the high-range component of a content signal output by the speakers FR and SR positioned in the right direction makes it easy for a user to hear the voice of a person running side by side present in the right direction.

Note that, when a user riding the e-bike 10 during running and a person running side by side have a conversation, as described above, the level of the high-range component of a content signal output by part of the speakers FL, FR, SL, and SR is adjusted to be low, and in addition, the level of the high-range component of a content signal can be adjusted to be low for all of the speakers FL, FR, SL, and SR. As the level adjustment of the high-range component of a content signal output by the speakers FL, FR, SL, and SR, the output of the high-range component of a content signal from the speakers FL, FR, SL, and SR can be stopped.

Further, in a case that a user riding the e-bike 10 during running and a person running side by side have a conversation, when the user is speaking, in order to make it easy for the person running side by side to hear the voice of the user, the level of the high-range component of a content signal output by the speakers FL and SL, positioned in the opposite direction (left direction) of the right side being the side of the person running side by side, can be adjusted to be low to reduce the sound leakage range on the right side being the side of the person running side by side. Further, when a person running side by side is speaking, in order to make it easy for a user to hear the voice of the person running side by side, the level of the high-range component of a content signal output by the speakers FR and SR, positioned on the right side (right direction) being the side of the person running side by side, can be adjusted to be low.

Whether a user is speaking or a person running side by side is speaking can be recognized by, for example, performing an azimuth analysis of a sound source (speaker) of voice included in an audio signal output by a microphone constituting the sensor unit 129.

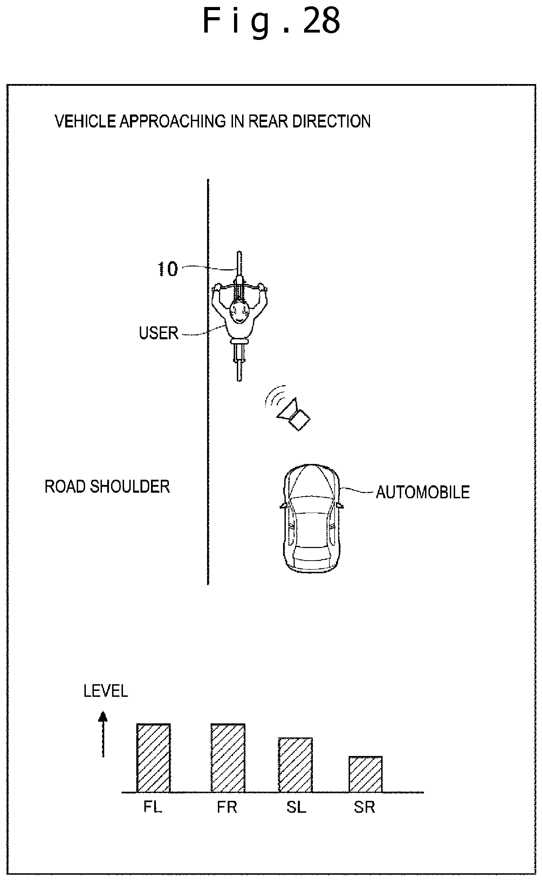

Fig. 28 is a diagram for explaining a sixth example of level adjustment of a high-range component of a content signal by the level adjustment unit 262 based on recognition information.

Fig. 28 illustrates an example of the level adjustment of the high-range component of a content signal when recognition information indicates that an automobile (vehicle) is approaching from the right rear direction of the e-bike 10 during running.

When an automobile is approaching from the right rear direction of the e-bike 10 during running, in a viewpoint of the safety of a user, the direction in which the user desires to hear the sound of surroundings is the direction of the approaching automobile, that is, the right rear direction. Hence, the level of the high-range component of a content signal output from the speaker SR, for example, positioned on the right rear direction can be adjusted to be lower than the default level.

Lowering the level of the high-range component of a content signal output from the speaker SR positioned in the right rear direction makes it easy for a user to hear the sound of the automobile approaching from the right rear direction.

Note that, when an automobile is approaching from the right rear direction of the e-bike 10 during running, in order to make it easier for a user to hear the sound of the rear direction, the level of the high-range component of a content signal output by the speaker SL positioned in the left rear direction in addition to the speaker SR positioned in the right rear direction can be adjusted to be lower than the default level. In the case above, the degree of reducing the level of the high-range component of a content signal can be mitigated for the speaker SL positioned on the left rear direction, which is a direction slightly deviated from the right rear direction being the direction of the approaching automobile, compared with the degree of reducing the level of the high-range component of a content signal for the speaker SR positioned in the right rear direction, which is a direction substantially coincident with the right rear direction being the direction of the approaching automobile.

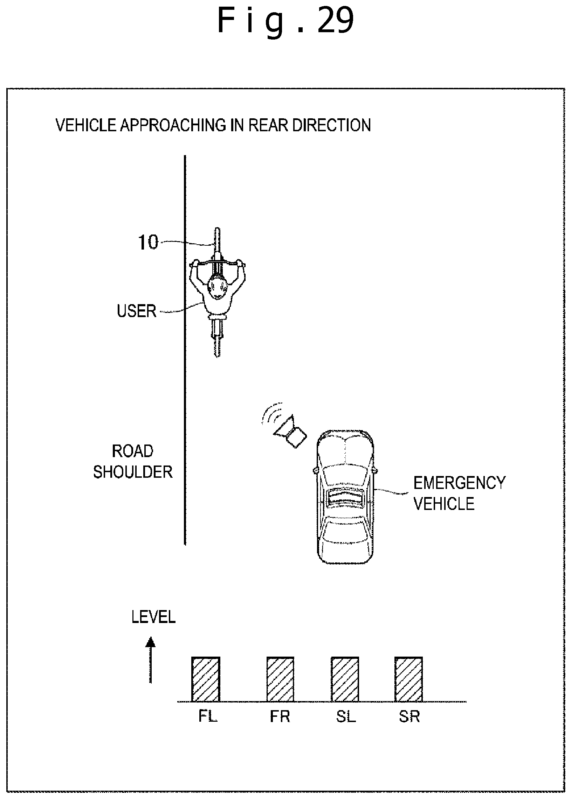

Fig. 29 is a diagram for explaining a seventh example of level adjustment of a high-range component of a content signal by the level adjustment unit 262 based on recognition information.

Fig. 29 illustrates an example of the level adjustment of the high-range component of a content signal when recognition information indicates that specific sound is recognized.

For example, when specific sound such as siren sound of an emergency vehicle is emitted around the e-bike 10 during running, it is desirable that a user quickly recognizes the specific sound being emitted from a viewpoint of safety of the user and a viewpoint to prevent disturbing the emergency vehicle to run. Hence, for example, the level of the high-range component of a content signal output by all of the speakers FL, FR, SL, and SR can be adjusted to be lower than the default level. Alternatively, as the level adjustment of the high-range component of a content signal output from the speakers FL, FR, SL, and SR, the output of the high-range component of a content signal from all of the speakers FL, FR, SL, and SR can be stopped.

Further, when the recognition information indicates a sound source of specific sound, for example, indicates that an emergency vehicle emitting siren sound is approaching, the level of the high-range component of a content signal output by the speaker positioned in the direction of the approaching emergency vehicle, among the speakers FL, FR, SL, and SR, can be adjusted to be lower than the default level.

For example, as illustrated in Fig. 29, when an emergency vehicle emitting siren sound is approaching from the right rear direction of the e-bike 10 during running, in order to make it easy for a user to hear the sound of the right rear direction, the level of the high-range component of a content signal output by the speaker SR positioned in the same right rear direction can be adjusted to be lower than the default level.

In the case above, as described before, when the level of the high-range component of a content signal output by all of the speakers FL, FR, SL, and SR have already been adjusted to be low, the level of the high-range component of a content signal output from the speaker SR positioned in the right rear direction can be adjusted to be further lower.

Note that, for the speaker SR positioned in the right rear direction, the output of the high-range component of a content signal can be stopped as the level adjustment of the high-range component of a content signal.

Further, the sound to be the specific sound can be set in advance.

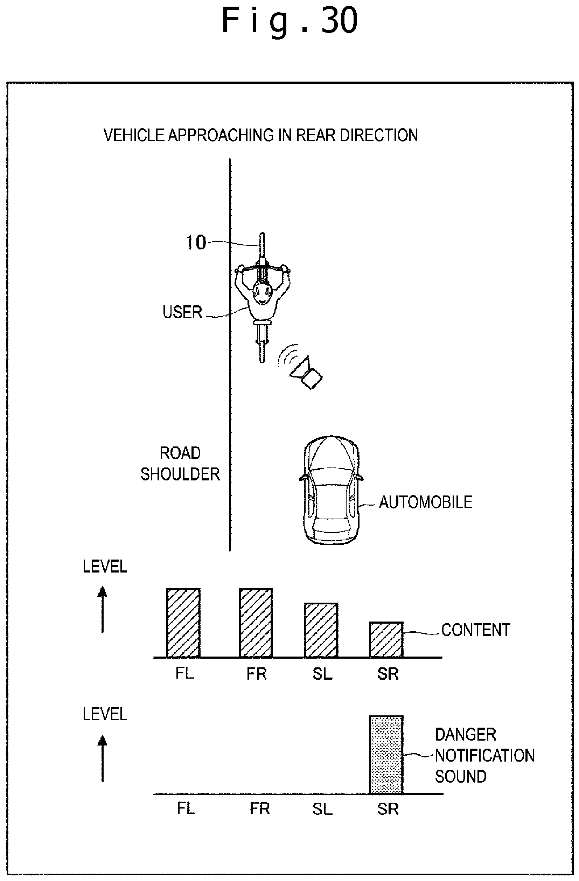

Fig. 30 is a diagram for explaining an example of superimposition (content mixing) of an audio signal of danger notification sound on a high-range component of a content signal by the superimposition unit 263.

When the superimposition unit 263 recognizes, for example, danger such as approach of an automobile (vehicle) to the e-bike 10 based on recognition information, the superimposition unit 263 superimposes an audio signal of danger notification sound for giving notice of danger on the high-range component of a content signal.

In Fig. 30, the same as in Fig. 28, the recognition information indicates that an automobile is approaching from the right rear direction of the e-bike 10 during running. In the case above, as described with reference to Fig. 28, the level adjustment unit 262 can adjust the level of the high-range component of a content signal to be lower than the default level with the speaker SR in the right rear direction and, as necessary, with the speaker SL in the left rear direction.

The superimposition unit 263 can superimpose an audio signal of the danger notification sound on the high-range component of a content signal output by the speaker SR in the direction of the approaching automobile, that is, in the right rear direction.

As the danger notification sound, for example, a voice for giving notice of danger such as approach of an automobile or predetermined warning sound can be adopted. Further, as the danger notification sound (audio signal thereof), for example, a signal obtained by enhancing the audio signal of the sound of the approaching automobile can be adopted. The audio signal of the sound of an approaching automobile can be obtained, in the superimposition unit 263, by separating the audio signal of the sound of the approaching automobile included in the audio signal collected by the microphone constituting the sensor unit 129.

As described above, superimposing the audio signal of the danger notification sound on the high-range component of a content signal makes it possible for a user to quickly recognize danger such as the approach of an automobile and to take an action to avoid the danger as necessary.

Although the e-bike 10 to which the present technology is applied has been described above, the present technology can be applied to various mobile objects in addition to a bicycle such as an electrically assisted bicycle (including a smart bike) like the e-bike 10. For example, the present technology can be applied to a personal mobility such as a moped (a motorcycle with pedals), a motorcycle, a kick scooter, a wheelchair, and a golf cart. In addition, for example, the present technology can be applied to various mobile objects such as an automobile, an airplane, a train, and a ship. Furthermore, the present technology can be applied to part of indoor or outdoor space in addition to a mobile object.

Further, the present technology can be applied, as a matter of course, to a mobile object on which a user rides in a state of being exposed to the outside like a bicycle or the like, and can also be applied to a mobile object on which a user rides in a state of being accommodated inside and being not exposed to the outside, such as an automobile having a closed body (closed car).

Note that the embodiments of the present technology are not limited to the embodiments described above, and can be modified variously within a range that does not depart from the gist of the present technology.

In addition, the effects described in the present description are merely examples and are not limited, and other effects may be obtained.

Note that the present technology may adopt the following configurations.
<1> A mobile object, including:
   a haptics device, in which
   the haptics device is disposed such that vibration of the haptics device vibrating in response to a low-range component of an audio signal stimulates a tactile sense of a user in a riding state.
<2> The mobile object according to <1>, in which
   the haptics device is disposed to a backrest in contact with the back of the user in the riding state.
<3> The mobile object according to <1> or <2>, in which
   the low-range component of the audio signal is a frequency component of approximately 100 Hz to 300 Hz or lower.
<4> The mobile object according to any one of <1> to <3>, in which
   a mid-range speaker for outputting a mid-range component of the audio signal is disposed to face a direction of the user in the riding state and is disposed to be positioned in front of and below the user in the riding state.
<5> The mobile object according to <4>, further including:
   a signal generation unit configured to generate the mid-range component of the audio signal delayed compared with a high-range component of the audio signal.
<6> The mobile object according to <4> or <5>, in which
   the mid-range component of the audio signal is a frequency component of approximately 100 Hz to 300 Hz or higher and approximately 1 kHz to 5 kHz or lower.
<7> The mobile object according to any one of <1> to <6>, in which
   a high-range speaker for outputting a high-range component of the audio signal is disposed to face a direction of the user in the riding state and is disposed to be positioned at a height near a height of the ears of the user in the riding state.
<8> The mobile object according to <7>, in which
   the high-range component of the audio signal is a frequency component of approximately 1 kHz to 5 kHz or higher.
<9> The mobile object according to <7> or <8>, including:
   a plurality of speakers as the high-range speakers.
<10> The mobile object according to <9>, further including:
   a recognition unit configured to recognize one or both of a state of the user and a situation of surroundings; and
   a level adjustment unit configured to adjust a level of the high-range component of the audio signal based on recognition information indicating a recognition result of the recognition unit.
<11> The mobile object according to <10>, in which
   the level adjustment unit lowers the level of the high-range component of the audio signal output by a speaker, among the plurality of speakers, positioned in an opposite direction of a direction in which suppression of sound leakage is desired in a view from the user in the riding state.
<12> The mobile object according to <11>, in which
   the level adjustment unit lowers the level of the high-range component of the audio signal output by a speaker, among the plurality of speakers, positioned in an opposite direction of a direction of a person in surroundings in a view from the user in the riding state.
<13> The mobile object according to any one of <10> to <12>, in which
   the level adjustment unit lowers the level of the high-range component of the audio signal output by a speaker, among the plurality of speakers, positioned in a direction in which sound of surroundings is desired to be heard in a view from the user in the riding state.
<14> The mobile object according to <13>, in which
   the level adjustment unit lowers the level of the high-range component of the audio signal output by a speaker, among the plurality of speakers, positioned in a direction of an approaching vehicle in a view from the user in the riding state.
<15> The mobile object according to <13>, in which
   the level adjustment unit lowers the level of the high-range component of the audio signal output by a speaker, among the plurality of speakers, positioned in a direction of a sound source of specific sound in a view from the user in the riding state.
<16> The mobile object according to any one of <10> to <15>, in which
   the level adjustment unit lowers the level of the high-range component of the audio signal output from all of the plurality of speakers when the user is in a state of getting off.
<17> The mobile object according to any one of <10> to <16>, further including:
   a superimposition unit configured to superimpose an audio signal of danger notification sound for giving notice of danger on the audio signal based on the recognition information.
<18> The mobile object according to <17>, in which
   the superimposition unit superimposes the audio signal of the danger notification sound on the high-range component of the audio signal output by a speaker, among the plurality of speakers, positioned in a direction of an approaching vehicle in a view from the user in the riding state.
<19> The mobile object according to <18>, in which
   the superimposition unit superimposes an audio signal of sound obtained by enhancing the sound of the vehicle on the high-range component of the audio signal as an audio signal of the danger notification sound.
<20> The mobile object according to any one of <1> to <19>, in which
   the mobile object is a bicycle.

### Reference Signs List

10 e-bike, 20 Frame, 21 Top tube, 22 Down tube, 31 Seat, 32 Backrest, 41 Handle, 42 Front fork, 43 Front wheel, 44 Rear wheel, 45 Pedal, 51 Battery, 61 Haptics device, 71 Speaker, 80 Support, 81 to 85 Speaker, 91 Display, 110 Information processing system, 111 Server, 121 SoC, 122 GPS unit, 123 BLE unit, 124 Touch screen, 125 Light emission unit, 126 Microcontroller, 127 Drive unit, 128 Haptics unit, 129 Sensor unit, 130 Audio unit, 141 RF modem, 142 CPU, 143 GPU, 151 Touch panel, 161 Drive unit, 171 Power amplifier, 211 Smartphone, 221 RTOS BLE module, 251 Recognition unit, 252 Content acquisition unit, 253 Multi-channelization unit, 254 Signal processing unit, 261 Signal generation unit, 262 Level adjustment unit, 263 Superimposition unit

## Claims

1. A mobile object, comprising:
a haptics device, wherein
the haptics device is disposed such that vibration of the haptics device vibrating in response to a low-range component of an audio signal stimulates a tactile sense of a user in a riding state.

2. The mobile object according to claim 1, wherein
the haptics device is disposed to a backrest in contact with the back of the user in the riding state.

3. The mobile object according to claim 1, wherein
the low-range component of the audio signal is a frequency component of approximately 100 Hz to 300 Hz or lower.

4. The mobile object according to claim 1, wherein
a mid-range speaker for outputting a mid-range component of the audio signal is disposed to face a direction of the user in the riding state and is disposed to be positioned in front of and below the user in the riding state.

5. The mobile object according to claim 4, further comprising:
a signal generation unit configured to generate the mid-range component of the audio signal delayed compared with a high-range component of the audio signal.

6. The mobile object according to claim 4, wherein
the mid-range component of the audio signal is a frequency component of approximately 100 Hz to 300 Hz or higher and approximately 1 kHz to 5 kHz or lower.

7. The mobile object according to claim 1, wherein
a high-range speaker for outputting a high-range component of the audio signal is disposed to face the direction of the user in the riding state and is disposed to be positioned at a height near a height of the ears of the user in the riding state.

8. The mobile object according to claim 7, wherein
the high-range component of the audio signal is a frequency component of approximately 1 kHz to 5 kHz or higher.

9. The mobile object according to claim 7, comprising:
a plurality of speakers as the high-range speakers.

10. The mobile object according to claim 9, further comprising:
a recognition unit configured to recognize one or both of a state of the user and a situation of surroundings; and
a level adjustment unit configured to adjust a level of the high-range component of the audio signal based on recognition information indicating a recognition result of the recognition unit.

11. The mobile object according to claim 10, wherein
the level adjustment unit lowers the level of the high-range component of the audio signal output by a speaker, among the plurality of speakers, positioned in an opposite direction of a direction in which suppression of sound leakage is desired in a view from the user in the riding state.

12. The mobile object according to claim 11, wherein
the level adjustment unit lowers the level of the high-range component of the audio signal output by a speaker, among the plurality of speakers, positioned in an opposite direction of a direction of a person in surroundings in a view from the user in the riding state.

13. The mobile object according to claim 10, wherein
the level adjustment unit lowers the level of the high-range component of the audio signal output by a speaker, among the plurality of speakers, positioned in a direction in which sound of surroundings is desired to be heard in a view from the user in the riding state.

14. The mobile object according to claim 13, wherein
the level adjustment unit lowers the level of the high-range component of the audio signal output by a speaker, among the plurality of speakers, positioned in a direction of an approaching vehicle in a view from the user in the riding state.

15. The mobile object according to claim 13, wherein
the level adjustment unit lowers the level of the high-range component of the audio signal output by a speaker, among the plurality of speakers, positioned in a direction of a sound source of specific sound in a view from the user in the riding state.

16. The mobile object according to claim 10, wherein
the level adjustment unit lowers the level of the high-range component of the audio signal output from all of the plurality of speakers when the user is in a state of getting off.

17. The mobile object according to claim 10, further comprising:
a superimposition unit configured to superimpose an audio signal of danger notification sound for giving notice of danger on the audio signal based on the recognition information.

18. The mobile object according to claim 17, wherein
the superimposition unit superimposes the audio signal of the danger notification sound on the high-range component of the audio signal output by a speaker, among the plurality of speakers, positioned in a direction of an approaching vehicle in a view from the user in the riding state.

19. The mobile object according to claim 18, wherein
the superimposition unit superimposes an audio signal of sound obtained by enhancing the sound of the vehicle on the high-range component of the audio signal as an audio signal of the danger notification sound.

20. The mobile object according to claim 1, wherein
the mobile object is a bicycle.
